(19) Europäisches Patentamt
European Patent Office
Office européen des brevets

(11) **EP 4 290 421 A1**

(12) **EUROPEAN PATENT APPLICATION**

(43) Date of publication:
**13.12.2023   Bulletin 2023/50**

(21) Application number: **22177733.7**

(22) Date of filing: **08.06.2022**

(51) International Patent Classification (IPC):
**G06N 10/20** (2022.01)          **G06N 10/60** (2022.01)

(52) Cooperative Patent Classification (CPC):
**G06N 10/20; G06N 10/60**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Molecular Quantum Solutions ApS
2860 Søborg (DK)**

(72) Inventors:
• **KRISTJUHAN, Kaur
  2450 Copenhagen (DK)**
• **NICHOLAS JONES, Mark
  1719 Copenhagen (DK)**

(74) Representative: **Zacco UK Ltd
The Surrey Technology Centre
40 Occam Road
The Surrey Research Park
Guildford, Surrey GU2 7YG (GB)**

(54) **METHOD OF PERFORMING A QUANTUM COMPUTATION**

(57)     A computer-implemented method for calculating the expectation value of a Hermitian quantum mechanical observable is disclosed in which the method comprises generating a representation of the quantum mechanical observable as a sum of outer products between two computational basis states of a quantum computer, partitioning the representation into disjoint subsets of terms, generating one quantum circuit, or any equivalent of it, for each subset, determined by the terms within each particular subset, executing the quantum circuits on the quantum computer for a plurality of repetitions to obtain a plurality of measurement results and determining the expectation value of the observable using the plurality of measurement results.

300

Generating a representation of the quantum mechanical observable as a sum of outer products between two computational basis states of a quantum computer — 302

Partition the representation into disjoint subsets of terms — 304

Generate a quantum circuit for each subset determined by the terms within each particular subset — 306

Obtain a plurality of measurement results by executing the quantum circuits on the quantum computer for a plurality of repetitions — 308

Determining the expectation value of the observable using the plurality of measurement results — 310

FIGURE 7

EP 4 290 421 A1

**Description**

TECHNICAL FIELD

The present disclosure relates to a method for calculating the expectation value of a Hermitian quantum mechanical observable and to related aspects for a quantum model which simulates a quantum system, for example, to determine the electronic structure of a molecule, and to various related aspects.

In particular, but not exclusively some aspects of the disclosed technology relate to a quantum model implemented on a hybrid quantum and classical computer system comprising a classical computer with classical computer processing units (CPUs), a quantum computer system with one or more quantum processor units (QPUs), and at least one other type of classical computing component, for example, a dedicated computer processing unit, CPU, (DC), such as for example, a field-programmable gate array, FPGA, where the quantum computer system and other type of computing units may be controlled by the classical computer system.

In particular, but not exclusively some aspects of the computer system are configured to perform a method of a calculating the expectation value of a Hermitian quantum mechanical observable according to some aspects of the disclosed technology where in particular, but not exclusively, the hybrid computer system is also configured to perform a method of representing a plurality of states for performing a quantum computation on the quantum computer using the determined expectation value of a Hamiltonian representing the energy of a molecule or equivalent system according to some aspects of the disclosed technology.

The disclosed technology is particularly useful for performing computational chemistry calculations to solve electronic structure problems, in other words, to determine the electronic structure of a molecule. Determining the electronic structure of a molecule may include, for example, determining the ground state of the electrons of the molecule, or some other electronic state which is specified as the lowest energy state which adheres to one or more physical constraints such as particle number, spin, and spatial symmetry which involves performing computations which are more efficiently performed using a quantum computer, both from a time and a computational resource perspective, than if performed using only a classical computer system.

BACKGROUND

Techniques for performing quantum computations for chemical calculations such as to determine a solution to an electronic structure problem are known in the art. For example, variational quantum eigensolvers, VQEs, are known in the art for use in solving electronic structure problems using a quantum computer.

Known VQEs however have various limitations, for example, if there are additional constraints on certain features such as particle number, spin multiplicity and spatial symmetries the set of valid answers will be restricted to just a subspace of the entire Fock space.

The variational method of finding the ground state of a system described by Hamiltonian $\hat{H}$ amounts to finding a state $|\psi\rangle$ that minimizes the expectation value of the Hamiltonian $\langle\psi|\hat{H}|\psi\rangle$. In electronic structure problems, the state $|\psi\rangle$ is searched for in a fermionic Fock space F, which is constructed from single-particle Hilbert spaces that consist of a finite number of spin orbitals. This search can be performed with a variational quantum eigensolver (VQE). In the VQE, a representation of a state $|\psi\rangle$ is prepared on a quantum computer (QC) and the expectation value of the Hamiltonian is inferred through partial state tomography. A classical optimization algorithm subsequently uses this information to determine which state the QC should prepare next, such that after sufficiently many iterations the QC is able to prepare and measure the ground state of the electronic structure of the molecule. Examples of how this can be achieved are well known in the art, for example, see References [1, 2, 3, 4, 5].

Known VQEs however have various limitations, for example, if there are additional constraints on certain features such as particle number, spin multiplicity and spatial symmetries the set of valid answers will be restricted to just a subspace of the entire Fock space. However, this creates a problem for known VQEs as, unless limited to search for solutions to within a valid subspace, their output may converge to a result representing a state which violates the feature constraints input to the VQE algorithm. Using a VQE to generate a "wrong" result in this way not only means that the original problem will not be solved but also that computational resources such as memory and processors which use energy will have been wasted. Another issue which may result in suboptimal performance by a VQE algorithm when it is used to address a constrained problem is that the lowest energy state of a constrained problem need not be the same as the lowest energy state of the unconstrained problem. In fact, it might not even be a local minimum in the unconstrained problem. This means that without somehow explicitly enforcing the constraints, the VQE algorithm may be unable to ever converge to the correct answer.

It is known to model problem constraints using an Ansatz design in which to prepare a state, the QC starts from some initial state $|\Psi_0\rangle$, which is operationally simple to prepare and is the same for all iterations. During the quantum computation, a sequence of operations is performed on the initial state to prepare the final state $|\psi\rangle$. This sequence of

operations can be expressed as a unitary operator $\hat{U}$, which is dependent on some set of parameters $\theta$. The classical part of the VQE algorithm determines the desired values of the set of parameters 0 and the resulting state determined by the QC can be expressed as $|\psi\rangle = \hat{U}(\theta)|\Psi_0\rangle$. The functional dependence of $\hat{U}$ on $\theta$ is called the Ansatz.

Whilst it is not obvious what the best Ansatz is for solving electronic structure problems, many varieties of Ansatz have been developed, guided by a plethora of metrics such as ease of implementation on hardware, number of average iterations required for convergence, depth of quantum circuit needed for implementation, number of multi-qubit gates in the circuit, number of independent parameters $\theta$ and overall simplicity, for example, see also References [6, 7, 8, 9]. Enforcing problem constraints through Ansatz design involves, for example, starting from an initial state $|\Psi_0\rangle$ that respects the constraints and then designing the Ansatz so that the unitary transformation $\hat{U}(\theta)$ does not subsequently violate them (see also for example, reference [10]). However, even when a suitable Ansatz is implemented , it is susceptible to errors, in particular to at least two types of errors: firstly, precise hardware operation may be impossible due to low gate fidelity and secondly, qubit readout errors can lead to inaccurate state tomography.

Another known approach, independent of Ansatz design, is to add penalty terms to the Hamiltonian, for example, as described in references [11, 12, 13]. Instead of finding the state $|\psi\rangle$ that minimizes $\langle \Psi|\hat{H}|\Psi\rangle$, the expression $\langle \Psi|\hat{H} + \hat{C}|\Psi\rangle$ could be minimized instead, where $\hat{C}$ represents an operator that has zero expectation value when $|\psi\rangle$ satisfies the constraint and a positive expectation value otherwise. For example, the number of electrons in a molecule can be set to two with the following choice: $\hat{C} = w\left(\sum_{i=1}^{N} \widehat{a_i^\dagger}\widehat{a_i} - 2\right)^2$ where $i$ indexes the $N$ different spin orbitals in the system, and $\widehat{a_i^\dagger}$ and $\widehat{a_i}$ are the fermionic creation and annihilation operators respectively and w is an appropriately chosen positive constant that weights the constraint relative to the Hamiltonian and any additional constraints added in this manner.

In this known approach it is relatively straightforward to add new constraints, each of which may require additional measurements on the quantum computer to evaluate. The choice of w is a separate task that needs to be optimized. A value too small would not enforce the constraint strongly, meaning that the VQE algorithm would still spend most of the time exploring the wrong part of the Fock space. A value too large would obstruct the algorithm from converging quickly if at all, as the primary goal of finding the ground state is eclipsed by the constraint terms. The presence of errors in state preparation, readout and insufficient repetitions for accurate estimation of the expectation value of measurements, result in these terms always having too large a value, restricting the ability of the VQE algorithm to improve on the relatively smaller terms originating from the problem Hamiltonian. Other disadvantages of the penalty term method approach are that it enforces constraints at the cost of more measurements, slower convergence and possibly a less accurate answer

The disclosed technology seeks to mitigate, obviate, alleviate, or eliminate various issues known in the art which affect the performance of VQEs implemented on hybrid or heterogeneous computer systems which are configured to solve computational chemistry problems such as electronic structure problems or any other suitable problems involving quantum systems which are subject to constraints.

## SUMMARY STATEMENTS

Whilst the invention is defined by the accompanying claims, various aspects of the disclosed technology including the claimed technology are set out in this summary section with examples of some preferred embodiments and indications of possible technical benefits.

A first aspect of the disclosed technology relates to a computer-implemented method for calculating the expectation value of a Hermitian quantum mechanical observable , the method comprising: generating a representation of the quantum mechanical observable as a sum of outer products between two computational basis states of a quantum computer, partitioning the representation into disjoint subsets of terms, generating one quantum circuit, or any equivalent of it, for each subset, determined by the terms within each particular subset, executing the quantum circuits on the quantum computer for a plurality of repetitions to obtain a plurality of measurement results; and determining the expectation value of the observable using the plurality of measurement results.

In some embodiments the partitioning is configured such that the minimal number of subsets required for the expectation value calculation does not exceed the dimension of the computational basis.

In some embodiments, the expectation value is retrieved as a linear combination of measurement outcome probabilities which are inferred from the measurements via Born's rule.

In some embodiments, the quantum circuits are configured to evaluate the observable in a specific quantum state.

In some embodiments, the computer-implemented method simulates a quantum state of a real system, based on the calculated expectation value of the quantum mechanical observable.

In some embodiments, the representation of the quantum mechanical observable in the computational basis of the quantum computer is a representation of a Hamiltonian of the system.

In some embodiments, the system is an electronic structure.

In some embodiments, the expectation value calculation is a component in determining a ground state of the fermionic/electronic structure.

In some embodiments, the expectation value calculation is a component in determining the lowest energy state of the fermionic/electronic structure, subject to a set of constraints.

In some embodiments, the quantum states describe how the occupancy of the electrons is distributed amongst the electronic structure.

In some embodiments, the circuit used to evaluate the subset of terms comprises a preparation segment, which prepares the quantum state, an alignment segment, which for every term in the subset, would prepare the same state if it were applied to both computational basis states within that term, and measurement segment, which performs measurements."

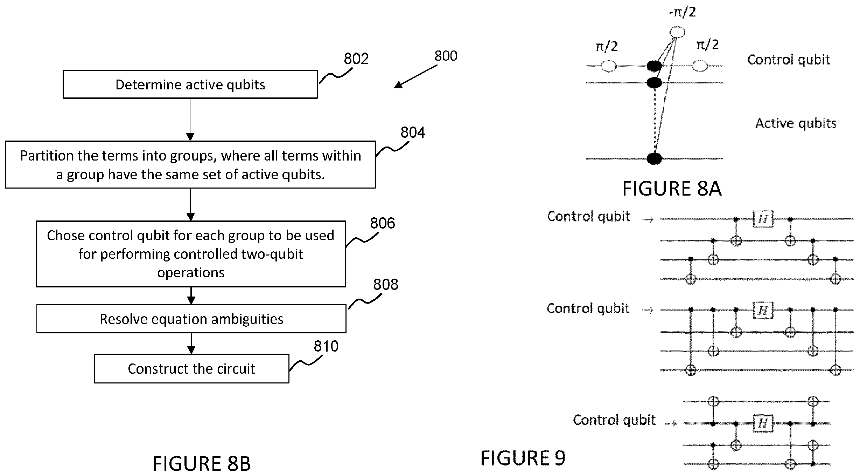

In some embodiments, the circuit alignment segment belongs to a family of circuits represented by ZX diagram of Figure 8.

The ZX diagram of Figure 8 shows the qubits in which the computational basis states of a term differ in their state as "active qubits". In the ZX diagram, one of the active qubits has been designated as a "control qubit".

A ZX diagram may also be referred to as a diagrammatic representation of a family of quantum circuits. In some embodiments of the first diagrammatic representation of a family of quantum circuits according to the ZX diagram of Figure 8, the circuit alignment segment belongs to the first diagrammatic representation of the family of circuits, and wherein the diagrammatic representation comprises a plurality of active qubits in which the computational basis states of a term differ in their state and at least one active qubit which is a designated "control qubit".

In some embodiments, the alignment segment is generated by applying a Hadamard gate to the control qubit and CNOT gates to either side of the Hadamard gate, such that every other active qubit is targeted from both sides by the control qubit either directly or by proxy.

Another aspect of the disclosed technology relates to a hybrid computer system comprising a quantum computer system and a classical computer system configures to implement a quantum model to solves a quantum system problem, for example, an electronic structure problem. The classical computer system is configured in some embodiments to calculate the expectation value of a Hermitian quantum mechanical observable and comprises.. The hybrid computer system comprises classical computer means or a module to generate a representation of the quantum mechanical observable as a weighted sum of terms, where each term is an outer product between two computational basis states of the quantum computer, classical computer means or a module configured to partition the representation into disjoint subsets of terms, classical computer means or a module configured to generate a quantum circuit for each subset determined by the terms within each particular subset, quantum computer means or a module for executing the quantum circuits on the quantum computer for a plurality of repetitions to obtain a plurality of measurement results, quantum computer means or a module for outputting the plurality of measurement results to the classical computer, wherein the hybrid computer system further comprises classical computer means or a module to receive output from the quantum computer and classical computer means or a module to determine the expectation value of the observable using the plurality of measurement results.

The classical computer means or module may comprise circuitry in some embodiments. The circuitry may be programmable in some embodiments. In some embodiments, the programmable circuitry may comprise one or more field programmable gate arrays.

Another aspect of the disclosed technology relates to a hybrid computer system comprising a classical computer system configured to calculate the expectation value of a Hermitian quantum mechanical observable by generating a representation of the quantum mechanical observable as a weighted sum of terms, where each term is an outer product between two computational basis states of a quantum computer, partitioning the representation into disjoint subsets of terms, generating one quantum circuit, or any equivalent of it, for each subset, determined by the terms within each particular subset; and a quantum computer configured to execute the quantum circuits on the quantum computer for a plurality of repetitions to obtain a plurality of measurement results, wherein the quantum computer is configured to output the plurality of measurement results to the classical computer for processing, and wherein the classical computer is configured to process the received plurality of measurement results to determine the expectation value of the observable.

Another aspect of the disclosed technology comprises a method to identify the subspace of states that adhere to constraints in an electronic structure problem.

Another aspect of the disclosed technology relates to a computer-implemented method of representing a plurality of states for performing a quantum computation on a quantum computer, the method comprising identifying a subspace of states conforming to a set of one or more constraints of an electronic structure, performing a linear bijective mapping between a plurality of states of the subspace and an unconstrained Hilbert space, generating a representation of the electronic structure problem Hamiltonian on the unconstrained Hilbert space, and generating a representation of the unconstrained Hilbert space on a quantum computer.

In some embodiments, the constraints comprise constraint operators in the form of second quantized operators admitting one or more permissible eigenvalues.

In some embodiments, the one or more constraint operators are used to construct the bijective mapping.

In some embodiments, generating the representation of the unconstrained Hilbert space on the quantum computer enables a representation of the Hamiltonian to be provided in a computational basis of the quantum computer.

In some embodiments, the dimension of the unconstrained Hilbert space is lower than the dimension of the electronic structure problem.

In some embodiments, the linear bijective mapping is performed by computational processing of sparse matrices.

In some embodiments, the computational processing of sparse matrices of each state is performed independently.

In some embodiments, the method is at least in part performed using a quantum computer comprising a plurality of quantum processing units, QPUs.

In some embodiments, the method is performed by a hybrid computer system comprising the quantum computer and at least one classical computer.

In some embodiments, the classical computer may comprise one or more CPUs configured to operate in parallel.

In some embodiments, the classical computer may comprise at least one field programmable gate array.

In some embodiments, a plurality of quantum circuits based on the representation of the unconstrained Hilbert space are executed on the quantum computer to calculate the expectation value of the Hamiltonian in any state belonging to the subspace.

In some embodiments, the expectation value calculations are used to determine the lowest energy state of the subspace in a variational quantum eigensolver, VQE.

In some embodiments, the bijective mapping excludes the states outside the subspace to reduce the subspace solved by the variational quantum eigensolver.

Advantageously, by only mapping the states in the subspace of states conforming to the set of one or more constraints of the electronic structure, the VQE may converge faster on a result which may result in a reduction in the total amount of energy required by the computational resources used by the VQE algorithm to generate the result.

Advantageously, by using a bijective mapping which excludes the states outside the subspace, state preparation errors made by the quantum computer can be suppressed, as the quantum computer is unable to erroneously prepare states outside of the subspace, as they have been excluded by the mapping.

In some embodiments, executing the plurality of quantum circuits on the quantum computer provides a simulation of orbital electron occupancy behaviour of the electronic structure subject to the constraints.

In some embodiments, the dimension of the unconstrained Hilbert space is lower than the dimension of the electronic structure.

Advantageously, by using an unconstrained Hilbert space which has a lower dimension than the dimension of the electronic structure being solved, some embodiments of the disclosed technology can use a quantum computer which has fewer quantum resources to determine the electronic structure than the quantum resources that a quantum computer would need to use if a direct mapping of the electronic structure was performed. Compared to alternative methods for reducing the dimension known in the art, the disclosed technology is able to achieve a higher degree of dimensionality reduction in some embodiments. Examples of quantum resources which may be reduced when implementing the disclosed technology include but are not limited to: a number of qubits used, a depth of a quantum circuit, a number of elements in a quantum circuit, and a required degree of connectivity among qubits.

Another aspect of the disclosed technology relates to a hybrid computer system configured to determine a representation of a plurality of states for performing a quantum computation on a quantum computer by performing a method comprising: identifying a subspace of states conforming to a set of one or more constraints of an electronic structure, performing a linear bijective mapping between a plurality of states of the subspace and an unconstrained Hilbert space, generating a representation of the electronic structure problem Hamiltonian on the unconstrained Hilbert space, and generating a representation of the unconstrained Hilbert space on a quantum computer.

Another aspect of the disclosed apparatus is an apparatus comprising means or one or more modules configured to perform any of the method aspects or embodiments. The means or one or more modules may comprise one or more types of quantum or classical computer processing units in some embodiments. In some embodiments one or more of the quantum or classical computer processing units is at least in part implemented in circuitry. In some embodiments of the classical processing unit, the circuitry comprises a field programmable gate array.

Another aspect of the disclosed technology comprises a method to construct a linear bijective mapping between states of that subspace and a new, unconstrained Hilbert space.

Another aspect of the disclosed technology comprises a method to use that mapping to represent those states on a quantum computer.

Another aspect of the disclosed technology comprises a method to construct a new Hamiltonian, whose expectation value in a mapped state is equal to the expectation value of the original Hamiltonian in the unmapped state

Another aspect of the disclosed technology comprises a method to use the mapping to represent the new Hamiltonian in the basis of the mapped states

Another aspect of the disclosed technology comprises a method to calculate any terms that appear when writing out the terms that appear when the expectation value of the Hamiltonian is expanded in this basis.

Another aspect of the disclosed technology comprises a method to perform this calculation by using measurements obtainable from a quantum computer.

Another aspect of the disclosed technology comprises a method to prepare the necessary state needed on the quantum computer to allow those measurements 9. A method to construct circuits for this preparation, tailored specifically to the terms that are to be measured.

Another aspect of the disclosed technology comprises a method to evaluate whether a given circuit is equivalent to those provided here as examples.

In some embodiments of the above aspects, the methods are simulated on a computer system comprising one or more quantum computing components, one or more classical computing components, and one or more dedicated computing processors or processing circuitry, for example, FPGAs.

The disclosed aspects and embodiments may be combined with each other in any suitable manner which would be apparent to someone of ordinary skill in the art.

BRIEF DESCRIPTION OF THE DRAWINGS

Some embodiments of the disclosed technology are described below with reference to the accompanying drawings which are by way of example only and in which:

Figure 1 schematically illustrates a hybrid computer system according to some embodiments of the disclosed technology.

Figure 2 schematically illustrates a system on which a computational chemistry model for the electronic structure of a molecule is implemented using a VQE algorithm according to some embodiments of the disclosed technology;

Figure 3 schematically illustrates a method of generating a state representation for use by a VQE algorithm according to some embodiments of the disclosed technology;

Figure 4 schematically illustrates a more detailed method of generating an expectation value of a Hamiltonian according to some embodiments of the disclosed technology;

Figure 5 schematically illustrates how valid states in a Fock space can be represented in a quantum computer;

Figure 6 schematically illustrates a two qubit example of circuit generation for an expectation value calculation; and

Figure 7 schematically illustrates an example method for calculating the expectation value of a Hermitian quantum mechanical observable according to some embodiments of the disclosed technology;

Figure 8A represents a ZX diagram for a family of equivalent quantum circuits;

Figure 8B schematically illustrates a method of generating a quantum circuit according to some embodiments of the disclosed technology;

Figure 9 shows an example of a family comprising three quantum circuits which are equivalent in terms of the unitary transformation that they perform and their ZX diagram representation;

Figure 10 shows a prior art quantum circuit that prepares the ground state $|\Psi g\rangle$ of molecular hydrogen; and

Figure 11 shows another example of a quantum circuit which can be used to determine the ground state energy of a Hamiltonian for molecular hydrogen according to some embodiments of the computational chemistry models of the disclosed technology.

DETAILED DESCRIPTION

Aspects of the present disclosure will be described more fully hereinafter with reference to the accompanying drawings. The apparatus and method disclosed herein can, however, be realized in many different forms and should not be construed as being limited to the aspects set forth herein. Steps, whether explicitly referred to as such or if implicit, may be re-ordered or omitted if not essential to some of the disclosed embodiments. Like numbers in the drawings refer to like elements throughout.

The terminology used herein is for the purpose of describing particular aspects of the disclosure only, and is not intended to limit the disclosed technology embodiments described herein. As used herein, the singular forms "a", "an" and "the" are intended to include the plural forms as well, unless the context clearly indicates otherwise.

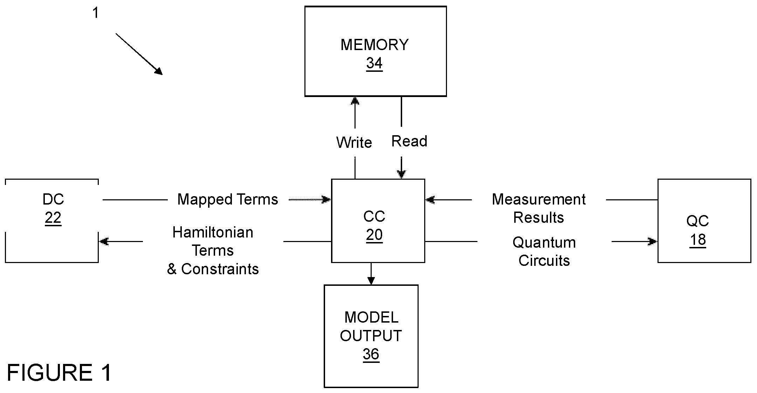

Figure 1 of the drawings shows schematically an embodiment of a hybrid or heterogeneous computer system, referred to herein as a hybrid computer system 1, according to the disclosed technology. In the embodiment of the hybrid computer system 1 illustrated schematically in Figure 1 the which comprises a quantum computer system 18 and classical computer system 20 which includes circuitry 22 for implementing some classical calculations in hardware. As shown in the embodiment of Figure 1 the circuitry is programmable circuity comprising a dedicated classical computer component, in other words, a dedicated CPU or processing circuitry, shown in Figure 1 as DC 22, such as a field programmable gate array, FPGA.

The hybrid computer system 1 is configured to perform a quantum computation using a quantum model which simulates a quantum system. For example, in some embodiments the hybrid computer system 1 is configured to determine the electronic structure of a molecule. The quantum model of the electronic structure problem is configured for implementation on a hybrid computer system comprising a classical computer comprising classical computer processing units (CPUs), a quantum computer system comprising one or more quantum processor units (QPUs), and at least one other type of dedicated computing units, for example, a dedicated CPU or processing circuitry, such as, for example, field-programmable gate arrays, as are show in Figure 1. The quantum computer system and other type of computing units may be controlled by the classical computer system.

The quantum model may simulate or model a quantum system such as an electronic structure of a molecule, in which the features of the electronic structure to be solved are subject to one or more constraints. These constraints may be provided as part of the electronic structure problem which is input to the hybrid computer system for solving.

As shown in Figure 1, the classical computer 20 of the hybrid computer system 1 is configured to receive the input electronic structure problem and provide the constraints and Hamiltonian terms representing the electronic structure to the DC 22. The DC 22 performs a mapping of the constraints on the features of the electronic system so that the states which are likely satisfy the input electronic structure problem also satisfy the problem feature constraints. In some embodiments, the mapping only maps states which satisfy the relevant problem constraints and no others. This enables the hybrid computer system 1 to implement a variational quantum eigensolver, VQE algorithm, which performs its search exclusively among states known to satisfy the relevant problem constraints.

In addition to mapping states however, the hybrid computer system 1 also maps certain Fock space operators. For example, in some embodiments of the quantum model which use the Jordan-Wigner encoding, fermionic creation and annihilation operators defined on $\mathcal{F}$ are mapped to Pauli operators defined on $\mathfrak{H}$ .. For example:

$$\hat{a}_i^\dagger \rightarrow \frac{1}{2}(\hat{X}_i - i\hat{Y}_i) \bigotimes_{j<i} \hat{Z}_j$$

Equation 2

$$\hat{a}_i \rightarrow \frac{1}{2}(\hat{X}_i + i\hat{Y}_i) \bigotimes_{j<i} \hat{Z}_j$$

Equation 3

These transformations must be consistent with how the states transform and must preserve the anti-commutation relation of fermions:

$$\{\hat{a}_i, \hat{a}_j\} = 0$$

Equation 4

$$\{\hat{a}_i^\dagger, \hat{a}_j^\dagger\} = 0$$

Equation 5

$$\{\hat{a}_i, \hat{a}_j^\dagger\} = \delta_{ij}$$

Equation 6

The mapped terms are output to the CC 20 which then uses the mapped terms to generate one or more quantum circuits which are output to QC 18. The one or more quantum circuits then executed by the quantum computer 18 of the hybrid computer system 1 and the results are measured and provided as measurements results back to the CC 20. The CC 20 then generates model output 20. In some embodiments, the CC 20 is configured to control the operation of the DC 22 and QC 18 components, however, in some embodiments, the hybrid system 1 may be configured as a distributed system and a remote system may be used to control the CC 20 and/or the QC 18.

A control system of the hybrid computer system is implemented suing the CC 20 in some embodiments but in other embodiments it may be implemented remote or using another component system. For the sake of clarity, other components are omitted from Figure 1, for example, a signal delivery system or a quantum information processor unit within the quantum computer and other components whose inclusion would be apparent to anyone of ordinary skill in the art are not shown in Figure 1.

The QC 18 of the hybrid computing system 1 shown in Figure 1 is configured to perform quantum computational tasks such as simulations by executing quantum algorithms. Quantum computation may be performed by storing and manipulating information within individual states of a composite system, for example, quantum bits, referred to herein as qubits, may be stored in and represented by a two-level sub-manifold of a quantum coherent physical system in a quantum processor in some embodiments

The QC 18 operates using gate-based models for quantum computing in which, for example, qubits have an initial state and a quantum logic circuit comprising a series of logic gates is applied to the qubits to transform the qubits and extract measurements representing the output of the quantum computation. In some embodiments, the qubits may be initialized to an initial state for which the Hamiltonian is transformed by adjusting control parameters to another state which is then measured to obtain an output of the quantum computation.

Examples of quantum circuits can be implemented as superconducting quantum integrated circuits, in which qubit devices store and process quantum information. For example, qubit devices may operate as ancilla qubits, data qubits, or other types of qubits in a quantum algorithm which is executed using the quantum circuits. Coupler devices in the quantum circuits can be used to perform quantum logic operations on single qubits or conditional quantum logic operations on multiple qubits. This may result, in some situations, in large-scale entanglement within the quantum processor when the conditional quantum logic is performed on multiple qubits.

The CC 20 is used to deliver control signals to the quantum circuits to, for example, cause the quantum computer 18 to manipulate the quantum states of individual qubits and the joint states of multiple qubits. The quantum computer 18 then reads information from the quantum circuits by measuring the quantum states of the qubit devices.

The CC 20 and/or QC 18 may be maintained in a controlled environment, for example, a controlled cryogenic environment so that the quantum system 18 operates at a sufficiently low temperature. The CC 20 and/or QC 18 system components are also suitably shielded so that they are subject to very low electromagnetic and thermal noise. The CC 20 may operate at room temperature and in some embodiments may execute software to compile instructions for the quantum processing units, QPUs, of QC 18 to execute. Individual QPUs are not shown in Figure 1 for clarity.

A signal delivery system (also not shown in Figure 1) acts as an interface to allow communication between the CC 20 and the QC 18. In some embodiments, the signal delivery system is configured to perform operations such as signal pre-processing or conditioning to the control signals generated by the CC 20 before these are sent to the QC 18. Any suitable form of signal delivery system known in the art to be suitable for transferring signals between the QC 18 and the CC 20 may be used.

The CC 20 may comprise one or more classical computer systems or components configured to generate control instructions based on a quantum algorithm which is configured for execution by the hybrid computer system 1. For example, one or more classical computational processing units, CPUs, not shown in Figure 1, of the CC 20 may convert a quantum algorithm, for example, comprising a set of coded instructions in a quantum programming language, to an instruction set for the native gate set or architecture of the QC 18. The CC 20 may also include hardware that digitizes response signals from the QC 18. Any suitable conversion mechanism(s) known in the art may be used for the conversions from the CC 20 to the QC 18 and vice versa.

The QC 18 may comprise multiple quantum information processing units or quantum processor units, QPUs which in some embodiments may operate independently of each other, for example, the QC 18 may be provided in the form of a distributed QC system in some embodiments. In some embodiments, the hybrid computer system 1 comprises one or more CCs 20 configured to control one or more QCs.

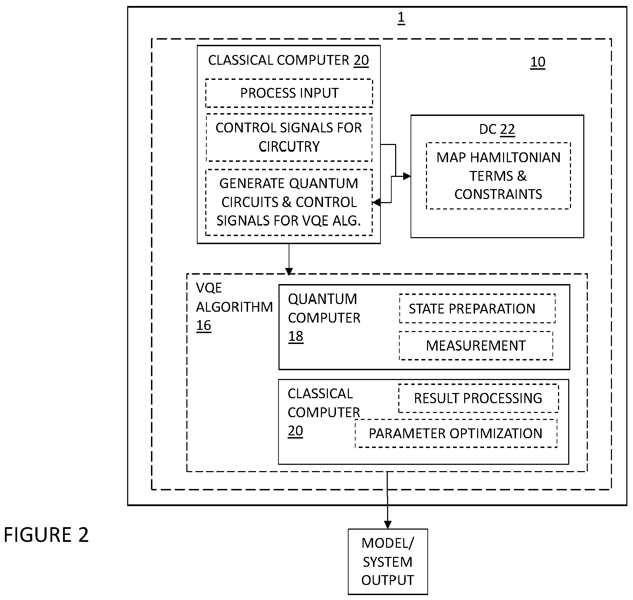

Some embodiments of the hybrid computer system 1 comprise a hybrid computer system 1 as shown schematically in Figure 2 configured to implement a computational model 10. The computational model is configured to solve an electronic structure problem using a variational quantum eigensolver, VQE algorithm 16. In Figure 2, executed modules or functional components are shown within dashed boundary lines and the execution environments are shown within solid boundary lines.

As shown in Figure 2, the chemical model 10 runs on a system 1 which comprises a QC 18 comprising one or more QPUs, a CC 20 comprising at least one CPU (and possibly other dedicated processing units, such as a graphics processing unit, GPU for example), and one or more other dedicated computer processing units or processing circuitry, shown as DC 22 in Figure 2. In some embodiments, DC 22 comprises an FPGA.

Collectively, the components of the computer system 1 are configured to solve the electronic structure problem using the chemical model 10. To do this, CC 20 of system 1 is given a suitable description of a molecule such as its chemical and isomeric structure as input, for example, via a user interface or via a file transfer or other suitable mechanism.

The CC 20 comprises suitable processing unit(s) or CPU(s) which are configured to read and write data to a suitable form of memory such as memory 34 shown in Figure 1 and to receive and process input and to generate output. For example, in some embodiments, CC 20 IS given a suitable description of a particular molecule such as its chemical structure as input, processes the input to determine the Hamiltonian terms and structure constraints, and outputs the Hamiltonian terms and structure constraints with control signals for the DC22.

The DC 22 then processes and maps the Hamiltonian terms and constraints using a suitable technical such as those described in more detail later below in conjunction with Figure 2B and the resulting mapped terms are then output back to the CC 20.

The CC 20 uses the input from the DC22 to prepare an initial quantum state representation and quantum circuits which will operate on the initial quantum state representation to transition each quantum state acted upon when the quantum circuit is executed.

The initial quantum state representations and quantum circuits are output to one or more quantum processing unit(s) or QPUs of QC 18 for execution. The resulting transitioned states generated by iteratively executing the quantum circuits on the initial quantum state representation until some condition for terminating the iterations is reached are measured in each iteration by the QC 18.

The measurement results are then output by the QC 18 back to the CC 20 which determines the expectation value of the initial Hamiltonian using the expectation values of the transformed Hamiltonian based on the output provided by the QC 18.

The expectation value of the initial Hamiltonian obtained by the CC 20 may be held as a data structure in memory and/or processed as output 36 so as to allow a suitable representation on a display or printout of the results of executing the chemical model 10 on the system. The CC 20 may also process the expectation values to perform parameter optimization in some embodiments of the computational chemistry model 1.

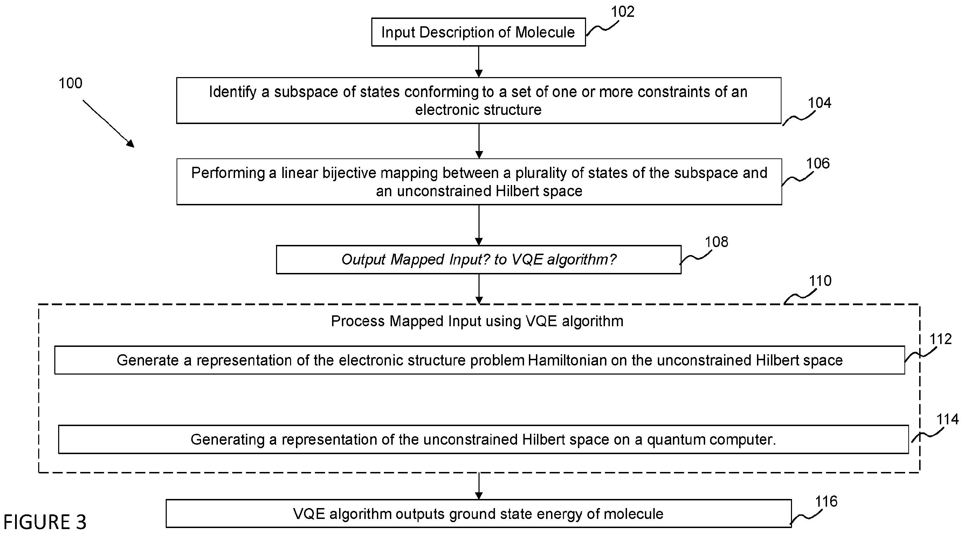

Figure 3 shows an example of a computer-implemented method 100 of representing a plurality of states for performing a quantum computation on a quantum computer according to some embodiments of the disclosed technology which the hybrid computer system 1 of Figure 2 may perform to implement a computational chemistry model 10 which represents the electronic structure of a molecule. As shown in Figure 3, first, a suitable description of the chemical structure of the molecule is input (102) to the system 1. The system 1 then performs method 100 by first identifying (104) a subspace of states conforming to a set of one or more constraints of an electronic structure, performing (106) a linear bijective mapping between a plurality of states of the subspace and an unconstrained Hilbert space, and then processing (110) the mapped input using a VQE algorithm which then outputs (116) the ground state energy of the electronic structure of the molecule. The processing (110) of the mapped input using the VQE comprises generating (112) a representation of the electronic structure problem Hamiltonian on the unconstrained Hilbert space and generating (108) a representation of the unconstrained Hilbert space on a quantum computer (114) from which the output (116) is determined.

In some embodiments, the constraints which are mapped by the DC 22 in 106 comprise constraint operators in the form of second quantized operators admitting one or more permissible eigenvalues. The one or more constraint operators can be used to construct the bijective mapping used in 106 in some embodiments.

In some embodiments, generating the representation of the unconstrained Hilbert space on the quantum computer enables a representation of the Hamiltonian to be provided in a computational basis of the quantum computer. The dimension of the unconstrained Hilbert space is lower than the dimension of the electronic structure problem in some embodiments.

In some embodiments, the linear bijective mapping is performed by the DC 22 performing a computational processing of sparse matrices which is explained in more detail below. The computational processing of sparse matrices of each state may be performed independently.

The hybrid computer system which performs the method 100 includes a quantum computer comprising a plurality of quantum processing units, QPUs in some embodiments. In some embodiments, the method is performed by a hybrid or heterogeneous computer system, also referred to herein as a hybrid computer system 1, which comprises one or more quantum computers 18 and at least one classical computer 20. The classical computer 20 may comprise one or more CPUs configured to operate in parallel in some embodiments. The classical computer 20 may comprise or be configured to control and/or communicate with dedicated circuitry components such as, for example, DC 22, for example, at least one field programmable gate array, FPGA.

The hybrid computer system 1 executes a plurality of quantum circuits which are based on the representation of the unconstrained Hilbert space on the quantum computer 18. The iterative execution of the quantum circuits calculates the expectation value of the Hamiltonian in any state belonging to the subspace. The resulting expectation value calculations are then used to determine the lowest energy state of the subspace in a variational quantum eigensolver, VQE, which provides a solution to the electronic structure problem.

The energy state(s) of the subspace in the VQE which is (are) determined by executing the plurality of quantum circuits on the quantum computer provide a simulation of orbital electron occupancy behaviour of the electronic structure subject to the constraints provided as input to the system in some embodiments.

The bijective mapping which is used, and which is described in more detail below, excludes states outside the subspace to reduce the subspace solved by the variational quantum eigensolvers.

One technical benefit of this is that by only mapping the states in the subspace of states conforming to the set of one or more constraints of the electronic structure, the VQE may converge faster on a result which may result in a reduction in the total amount of energy required by the computational resources used by the VQE algorithm to generate the result.

Another technical benefit of using a bijective mapping which excludes the states outside the subspace, is that state preparation errors made by the quantum computer can be suppressed, as the quantum computer is unable to erroneously prepare states outside of the subspace, because they have been excluded by the mapping.

In some embodiments, the dimension of the unconstrained Hilbert space is lower than the dimension of the electronic structure. A technical benefit of using an unconstrained Hilbert space which has a lower dimension than the dimension of the electronic structure being solved is that the chemical model may be run on a quantum computer which has fewer quantum resources to determine the electronic structure than the quantum resources that a quantum computer would need to use if a direct mapping of the electronic structure was performed.

Compared to alternative methods for reducing the dimension known in the art, some embodiments of the disclosed technology are able to achieve a higher degree of dimensionality reduction in some embodiments. Examples of quantum resources which may be reduced when implementing the disclosed technology include but are not limited to: a number of qubits used, a depth of a quantum circuit, a number of elements in a quantum circuit, and a required degree of connectivity among qubits.

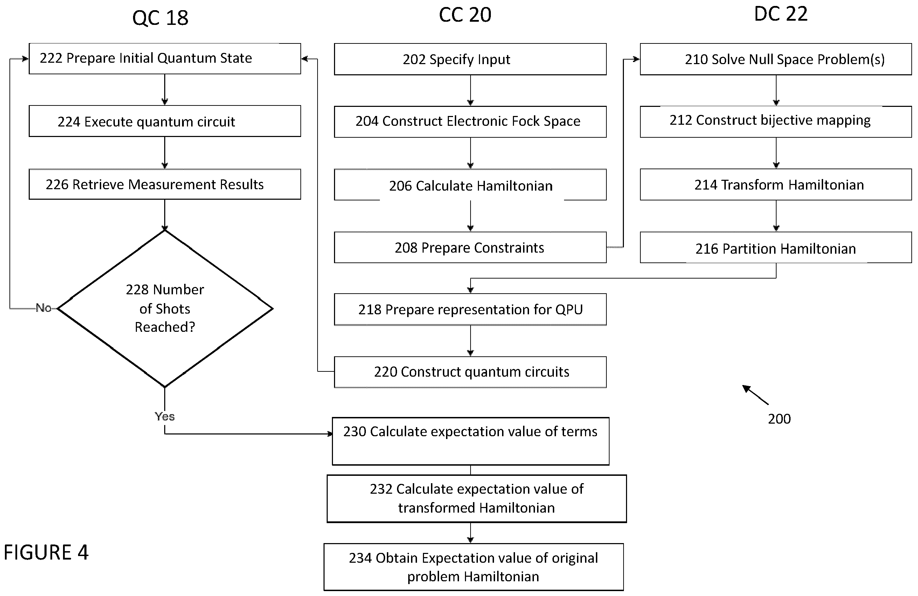

Figure 4 of the accompanying drawings shows in more detail an example embodiment of a method 100 for solving an electronic structure problem which uses a computational chemistry model 10 is run on a hybrid computer system 1 comprising at least one QC 18, at least one CC 20, and at least one DC 22.

In the example embodiment illustrated in Figure 3, the chemical model 10 is implemented on a hybrid computer system which comprises three distinct computational components: a quantum computer component indicated by QC 18, a classical computer component indicated by CC 20, and a circuitry or hard-coded component, or other form of dedicated computer circuitry 22, for example, a field programmable gate array FPGA.

The embodiment of method 100 shown in Figure 3 is labelled method 200. Method 200 comprises the CC 20 receiving input in 202 which specifies the chemical structure of the molecule for which the electronic structure is to be modelled. For example, the list of inputs which may need to be specified in some embodiments of the disclosed technology include the coordinates and charges of all atomic nuclei of the molecule, the choice of orbital basis set and which spin orbitals will be used for calculations by the chemical model, as well as any constraints such as the number of electrons in the molecule, the multiplicity of ground states, and the number of shots for the quantum computer. Here the term "shots" refers to the number of times the quantum algorithm is run to obtain a probability distribution of results. The number of repeated runs may be set arbitrarily or limited to a maximum number by the quantum computer architecture/model being used to simulate the quantum calculation.

CC 20 processes the chemical structure to determine the electronic Fock Space in 204. Construction of the electronic Fock space comprises representing all possible states in the number occupancy basis of the given basis set and constructing suitable creation and corresponding annihilation operators for each spin orbital.

The CC 20 then calculates the Hamiltonian in 206 and prepares the constraints for features of the chemical structure in 208. The Hamiltonian is calculated in 206 by taking the coordinates and charges of all atomic nuclei of the molecule whose electronic structure is being modelled and using the Born-Oppenheimer approximation to calculate a second quantized Hamiltonian which acts on the Fock space determined in 204. The Hamiltonian comprises a sum of terms where one term is proportional to the identity operator and all other terms are proportional to a product of either one or two pairs of creation and annihilation operators. The constraints are prepared by reformulating each constraint as the null space problem of a second quantized operator acting on the Fock space constructed in 204.

The CC 20 then provides output representing the Hamiltonian and the constraints to the DC component 22 which processes the input to solve null space problems in 210 using the constraints reformulated in 208 as the null space problem of a second quantized operator acting on the Fock space calculated in 204. The null space problems for each constraint are solved, either independently or as part of a sequential algorithm, to determine the minimal set of states which span the intersection of the null space of all the constraints. These states are referred to herein as "valid states".

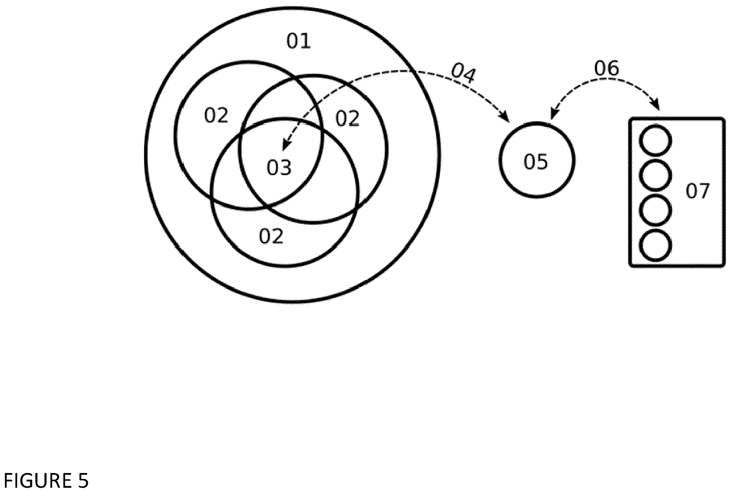

Turning briefly now to Figure 5 of the accompanying drawings, this shows the relationships between Fock space (shown as 01), a plurality of constraints on the states in Fock space labelled 02 in Figure 5, and the resulting valid states 03. It is the valid states labelled 03 in Figure 5 which are then subject to the linear bijective mapping labelled 04 in Figure 5.

Returning now to Figure 4, the DC22 generates a bijective mapping in 212, for example, by defining a Hilbert space such that each state in the Hilbert space corresponds to precisely one valid state. A mapping operator then constructed which maps the valid states to this space. This mapping is linear and bijective in some embodiments, meaning that the mapping provides a one-to-one correspondence such that the transpose of the mapping operator inverts the mapping. This bijective linear mapping is then used to transform the Hamiltonian in 214. The transformed Hamiltonian may be represented as a sum of outer products between basis states of the Hilbert space in some embodiments of the chemical model 10. The computational model then partitions the terms of the transformed Hamiltonian into disjoint subsets in 216 by examining the positions of the differences within each outer product. The bijective mapping is constructed by first defining in a Hilbert space in which each space in the Hilbert space corresponds to one valid state. An operator, referred to herein as the mapping operator, is then constructed which maps the valid states to this space.

The DC, for example, an FPGA, 22 then outputs the transformed Hamiltonian back to the CC 20. CC 20 then prepares a representation of the Hilbert space in 218 for processing by the quantum processing unit of QC 18 by assigning a computational basis state for each of the valid states that have been mapped. The CC 20 also constructs one or more quantum circuits in 220. A quantum circuit is constructed for every subset constructed in 218. Each quantum circuit comprises a circuit segment, referred to herein as a segment, that prepares a quantum state and a segment that is specific to the subset and which is designed by an embodiment of a method disclosed herein, and a segment that performs measurements such that the results of the calculation can be retrieved.

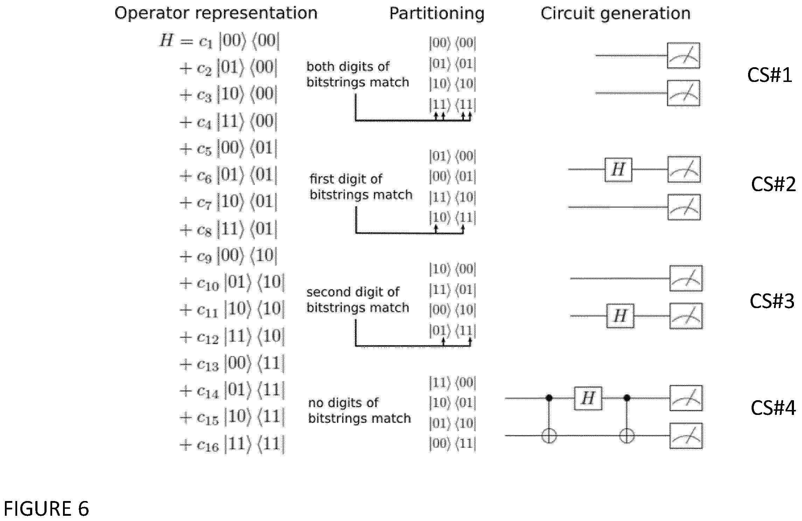

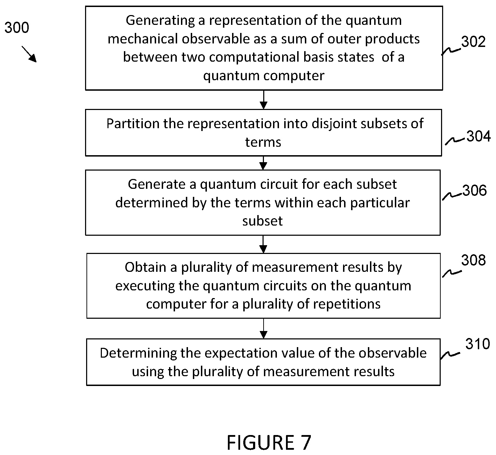

Turning briefly now to Figure 6 of the accompanying drawings, this shows schematically a two qubit example of circuit generation for calculating an expectation value according to some embodiments of the disclosed technology, for example, by using method 300 shown in Figure 7 of the accompanying drawings described in more detail below.

In Figure 6, the operator representations are shown on the left. The operator representation is then partitioned according to which digits in the bit-strings match to generate the circuit segments. As shown in Figure 6, by matching both digits of the bit strings, a circuit segment such as that labelled CS#1 in Figure 6 is generated. By matching the first digits of the bit strings of the operator representation, a circuit segment such as that labelled CS#2 in Figure 6 is generated. By matching the second digits of the bit strings of the operator representation, a circuit segment such as that labelled CS#3 in Figure 6 is generated. By matching neither of the digits of the bit strings of the operator representation, a circuit segment such as that labelled CS#4 in Figure 6 is generated.

The circuit segment labelled CS#1 shown in Figure 6 uses standard quantum gate logic notation to represent a circuit segment which generates measurements on two qubits. The circuit segment labelled CS#2 shown in Figure 6 has a Hadamard gate H on the upper qubit being measured. The circuit segment labelled CS#3 has a Hadamard gate H on the lower qubit being measured. The circuit segment labelled CS#4 has two CNOT gates on the lower qubit which are on either side of a Hadamard gate H on the upper qubit being measured.

Returning now to Figure 4 again, the state representation and quantum circuits are output by the CC 20 to QC 18. The QC 18 processes the state representation provided by the CC 20 to generate the initial quantum state representation in 222. This comprises preparing the initial quantum state on the register of qubits in the QC 18. The QC 18 then executes the quantum circuits provided by the CC 20 using that quantum state representation in 224. The QC then perform a measurement of the result of executing the quantum circuits in 226, in other words a string of binary bits is generated in which every qubit in the register takes either a 0 or 1 value.

The quantum circuits are repeatedly executed using the same initial state representation for a number of iterations or shots in 228. The final result of executing the quantum circuits is output back to CC 20 which processes the result to calculate the expectation value of the terms representing the states in 230. The expectation value of each pair of terms may be calculated using the expectative methods described above in relation to Figure 3 and/or for example, using the techniques described in more detail below.

In some embodiments the expectation value calculation uses the occurrence probabilities of measurement outcomes, which are retrieved from the measurement results gathered in step 226 through, for example, frequentist inference, to determine the expectation value of the transformed Hamiltonian in 232.

The expectation value of the transformed Hamiltonian in 232 is retrieved by adding the expectation values of its terms in some embodiments. The expectation value of the transformed Hamiltonian determined in 232 is used to obtain the expectation value of the initial Hamiltonian in 234. Under the conditions specified in more detail later below, the expectation value of the original problem Hamiltonian is equal to the expectation value of the transformed Hamiltonian. The result of executing the chemical model 10 on a hybrid computer system 1, for example, such as those described herein above, is to model the electronic structure of a molecule and obtain the expectation value of the initial Hamiltonian obtained in 234.

The chemical structure problem shown schematically being modelled using a chemical structure model on a hybrid computer system 1 such as that shown in Figure 4, is equivalent to the problem of finding the ground state of a system described by Hamiltonian $\hat{H}$ or, equivalently, finding the state $|\psi\rangle$ that minimizes the expectation value of the Hamiltonian $\langle\Psi|\hat{H}|\Psi\rangle$. As mentioned above, in electronic structure problems, the state $|\psi\rangle$ is searched for in a fermionic Fock space $\mathcal{F}$, which is constructed from single-particle Hilbert spaces that consist of a finite number of spin orbitals. A VQE can be used, such as VQE 16 shown in Figure 2 to perform this search. In a VQE, a representation of a state $|\psi\rangle$ is prepared on a quantum computer (QC) and the expectation value of the Hamiltonian is inferred through partial state tomography. As was shown schematically in Figure 2, classical optimization algorithm running on CC 20 uses this information to determine which state the QC 18 should prepare next, such that after sufficiently many iterations the QC 18 is able to prepare and measure the ground state.

The VQE 16 shown in Figure 2 is able to cope with the additional constraints on certain features such as particle number, spin multiplicity and spatial symmetries the set of valid answers will be restricted to just a subspace of the entire Fock space as it is limited to search for solutions to within a valid subspace. The output of the VQE implemented by the disclosed technology does not accordingly converge to a result representing a state which violates the constraints of certain features of the problem input to the VQE algorithm.

The VQE algorithm 16 is in some embodiments accordingly constrained to a subspace with lower dimensionality than the full Fock space. A technical benefit of this is that the VQE search may converge faster. The CC 20 may not need to optimize as many independent parameters (see Figure 2) and this can result in a more computationally efficient VQE algorithm 16 which uses fewer computational resources for less time than would be required if an unconstrained VQE algorithm were used. This may also result in a more energy efficient VQE algorithm 16 be implemented to solve an electronic structure problem than an unconstrained VQE algorithm.

Another benefit of implementing a computational chemistry model such as that described in more detail later below and executing this on a hybrid computer system 1 as disclosed herein is that the accuracy of results may be maintained or improved over other systems which have more qubits when performing the chemical computations. The capabilities of near term Noisy Intermediate Scale Quantum (NISQ) devices are often limited by the number of available qubits. Advantageously, by reducing the number of required qubits, the disclosed technology may allow the solution of problems on NISQ devices that would otherwise be impossible due to lack of qubits. In addition, by using fewer qubits, the results obtained using the VQE 16 of the computational chemistry model 10 may be more resilient as regards errors. Algorithms that use more qubits tend to produce more errors when run on NISQ devices due to the involvement of more independently unknown or uncertain hardware parameters

In some embodiments of the disclosed computational chemistry model 10, partial state tomography is performed, for example, by first performing a set of measurements on QC 18 and then by extracting the desired answer through statistical analysis of the measurement results. In some embodiments, the way the measurements are performed by the model 10 may be selected to substantially reduce the number of total measurements needed to extract the same information at the same confidence level.

An example of a quantum computation to solve a problem using a QC 18 using the disclosed technology will now be described. First the problem must be encoded onto the quantum computer in some suitable way, for example, to solve a quantum system problem such as an electronic structure problem, quantum states in fermionic Fock space, $\mathcal{F}$, can be used to describe which orbitals are occupied by electrons.

For example, the state $|1001\rangle \in F$ represents a configuration, where first and last orbitals are occupied by electrons, whereas the other two are not. The most common and straightforward way of mapping such states onto a quantum computer is by using the Jordan-Wigner transformation (see, for example, references [14, 15]). These mappings preserve the notation of the states but change their meaning. For example, the state $|1001\rangle \in F$ described earlier is mapped to $|1001\rangle \in \mathcal{H}$, where $\mathcal{H}$ is the Hilbert space of the quantum computer, which has dimension $N = 2^Q$, where Q is the number of qubits in the register.

In the Hilbert space, the state $|1001\rangle$ represents the first and last qubits in the $|1\rangle$ computational basis state, while the others are in the $|0\rangle$ computational basis state. Other mappings are also known in the art. In order to develop a useful mapping for constraint enforcement, it is accordingly known that it is not necessary for all of the states in $\mathcal{F}$ (Fock space) to be mapped to corresponding states in $\mathcal{H}$ (Hilbert space).

A schematic representation of this can be seen in Figure 5. Continuing the earlier description of Figure 5, this shows schematically how the linear bijective mapping of the subset of valid states labelled 3 in $\mathcal{F}$ can be mapped using a linear bijective mapping according to the disclosed technology and described in more detail below, to Hilbert space. A qubit representation of Hilbert space is then constructed in the register of qubits in a quantum processing unit of QC 18.

In the above embodiments, the electronic structure Hamiltonian may be provided in any suitable form for processing, however, in some embodiments it is expressed as the following operator:

$$\hat{H} = c_I \hat{I} + \sum_{ij} c_{ij} \hat{a}_i^\dagger \hat{a}_j + \sum_{klmn} \hat{a}_k^\dagger \hat{a}_l^\dagger \hat{a}_m \hat{a}_n$$

The DC, for example, an FGPA, 22, which performs the linear bijective mapping in some embodiments of the disclosed uses a matrix form of this operator so as to multiply other matrices with it. Since the dimension of the matrix is exponential in the number of qubits, it is strongly advantageous if this matrix multiplication can be performed without storing the entire matrix in memory 34.

According to the disclosed technology, the DC22 implements a method for multiplying a matrix from the left by a given creation or annihilation operator ( $\widehat{a^\dagger}$ or $\hat{a}$ ), such that the multiplication is performed independently element-wise. This method of matrix multiplication can then be used to build any combination of those operators, including the Hamiltonian operator presented above.

The DC22 is configured to implement the method of matrix multiplication by splitting up the matrix into its constituent elements and running each matrix element in parallel. This ability to parallelize the calculation and the fact that the non-zero entries of the matrices of $\widehat{a^\dagger}$ and $\hat{a}$ have two possible values (making a binary representation maximally efficient), results in an DC 22, for example, an FPGA implementation being both possible and extremely efficient compared to other hardware implementations.

In some embodiments, sparse matrices are represented in which row and column coordinates range from 0 to $2^n$, where $n$ is a natural number corresponding to the number of qubits of the QC 18. Given the total number of qubits $n$ and the index $m \in \{0, \dots, n - 1\}$, multiplying a target sparse matrix M from the left with $\widehat{a_m}$ results in a new sparse matrix, which can be found using the following pseudocode:

1. For every non-zero element, listed in $M$, the row coordinate of that element is decreased by $2^{n-m-1}$

2. All elements with a negative row coordinate are deleted

3. All elements, where the m + 1 -th digit of the binary representation of the row coordinate is 1, are deleted

4. Only if $m \neq 0$, flip the sign of all elements, where the sum of the first m digits of the binary representation of the row coordinate is odd

The procedure is the same for $\widehat{a_m^\dagger}$ with modifications to the first three steps:

1. The coordinate is increased instead of decreased

2. All elements with a row coordinate equal or larger to $2^n$ are deleted

3. These elements are deleted if the digit is 0, rather than 1

To construct the total effect of $\hat{H}$, the individual products in the sum can be constructed using these two rules, and the results can immediately be summed together, without having to store anything in memory other than the final result.

By way of an example, consider a matrix M where

$$M = \begin{pmatrix} 0 & 1 & 0 & 0 \\ 0 & 0 & 0 & 0 \\ 0 & 1 & 0 & 0 \\ 0 & 0 & 0 & 1 \end{pmatrix} \leftrightarrow \begin{matrix} (0,1) & :1 \\ (2,1) & :1 \\ (3,3) & :1 \end{matrix}$$

The DC 22, for example, the FPGA, is configured to perform the following method:

$$\hat{a}_1 M \xrightarrow{\text{step 1}} \begin{matrix} (-1,1) & :1 \\ (1,1) & :1 \\ (2,3) & :1 \end{matrix} \xrightarrow{\text{step 2}} \begin{matrix} (1,1 & :1 \\ (2,3) & :1 \end{matrix} \xrightarrow{\text{step 3}} (2,3) \quad :1 \xrightarrow{\text{step 4}} (2,3) \quad :-1$$

In this case, by way of comparison the dense matrix calculation comprises:

$$\hat{a}_1 M = \begin{pmatrix} 0 & 1 & 0 & 0 \\ 0 & 0 & 0 & 0 \\ 0 & 0 & 0 & -1 \\ 0 & 0 & 0 & 0 \end{pmatrix} \cdot \begin{pmatrix} 0 & 1 & 0 & 0 \\ 0 & 0 & 0 & 0 \\ 0 & 1 & 0 & 0 \\ 0 & 0 & 0 & 1 \end{pmatrix} = \begin{pmatrix} 0 & 0 & 0 & 0 \\ 0 & 0 & 0 & 0 \\ 0 & 0 & 0 & -1 \\ 0 & 0 & 0 & 0 \end{pmatrix}$$

Figure 7 shows in more detail an example method for calculating the expectation value of a Hermitian quantum mechanical observable according to another aspect of the disclosed technology.

The method 300 shown in Figure 7 comprises a computer-implemented method for calculating the expectation value of a Hermitian quantum mechanical observable in which the method 300 comprises generating in 302 a representation of the quantum mechanical observable as a sum of outer products between two computational basis states of a quantum computer, such as QC 18 of a hybrid computer described herein above. The method further comprises partitioning in 304 the representation into disjoint subsets of terms, for example, as shown in Figure 6 and described herein above. The partitioning in 304 may be configured such that the minimal number of subsets required for the expectation value calculation does not exceed the dimension of the computational basis. In some embodiments, the representation of the quantum mechanical observable in the computational basis of the quantum computer is a representation of a Hamiltonian of the quantum system being modelled, in other words, of the electronic structure of the molecule being modelled in some embodiments.

The method further comprises generating in 306 one quantum circuit, or any equivalent of it, for each subset, determined by the terms within each particular subset. For example, as shown in Figure 6, the subsets were determined by the terms comprising the digits of the bit strings of the operator representation of $\hat{H}$. The quantum circuits are configured to evaluate the observable in a specific quantum state.

The method accordingly further comprises executing the quantum circuits on the quantum computer for a plurality of repetitions to obtain a plurality of measurement results in 308 and then determining the expectation value of the observable using the plurality of measurement results in 310.

In some embodiments, the expectation value is retrieved as a linear combination of measurement outcome probabilities which are inferred from the measurements via Born's rule.

In some embodiments, the computer-implemented method simulates a quantum state of a real system, based on the calculated expectation value of the quantum mechanical observable. The real system may comprise an electronic structure, for example, the electronic structure of a molecule such as its ground state.

In some embodiments, the expectation value calculation is a component in determining a ground state of the fermionic/electronic structure.

In some embodiments, the expectation value calculation is a component in determining the lowest energy state of the fermionic/electronic structure, subject to a set of constraints.

In some embodiments, the quantum states describe how the occupancy of the electrons is distributed amongst the electronic structure.

In some embodiments, the circuit used to evaluate the subset of terms comprises a preparation segment, which prepares the quantum state, an alignment segment, which for every term in the subset, would prepare the same state if it were applied to both computational basis states within that term, and measurement segment, which performs measurements.

In some embodiments, the circuit alignment segment belongs to a family of circuits represented by the ZX diagram shown in Figure 8. In the ZX diagram, the qubits in which the computational basis states of a term differ in their state have been named "active qubits" and one of the active qubits has been designated as a "control qubit".

In some embodiments, the ZX diagram shown above and in Figure 8 is referred to as a first diagrammatic representation of a family of circuits, and the circuit alignment segment belongs to the first diagrammatic representation of the family of circuits, wherein in the diagrammatic representation the qubits in which the computational basis states of a term differ in their state have been named "active qubits" and one of the active qubits has been designated as a "control qubit".

In some embodiments, the alignment segment is generated by applying a Hadamard gate to the control qubit and CNOT gates to either side of the Hadamard gate, such that every other active qubit is targeted from both sides by the control qubit either directly or by proxy. For example, the circuit segment labelled CS#4 in Figure 6 shows an example of such a circuit.

The above embodiments disclose an approach to making more efficient measurements by performing compatible measurements simultaneously. For example, in some embodiments, the expectation values of commuting operators is extracted from the same measurements by selecting an appropriate measurement basis. In some embodiments, an electronic structure Hamiltonian consisting of multiple groups of mutually commuting observables such as that shown in Figure 6 is constructed. By appropriately grouping the operator representations, for example, as shown in Figure 6 it is possible to measure them simultaneously.

Embodiments of the disclosed technology accordingly comprise in some embodiments a hybrid computational system 1 which may be configured to implement a computational chemistry model 10 which performs one or all of:

A method such as method 100 disclosed herein to map only those states onto the quantum computer that satisfy given constraints and no others so that the problem constraints are enforced. This method enables the enforcement of problem constraints.

A method to construct a transformed Hamiltonian in the basis of the states found when performing the first method, such that the expectation value of the transformed Hamiltonian is equal to the expectation value of the initial Hamiltonian, in all of the mapped states. This method reduces the number of qubits required for simulation of a quantum system.

A method such as method 300 disclosed herein which performs measurements to find the expectation value of the problem Hamiltonian. This method provides an efficient measurement scheme compatible with (but not limited to) the methods obtained from the previous two parts.

Some of the example embodiments disclosed where the computational chemistry model 10 is implemented on a hybrid computer system such as an embodiment of the hybrid computer system 1 described above are described below. The disclosed computational chemistry model allows a reduction in the quantum resource requirements of the QC 18 used by the hybrid computer system 1 by using classical computational resources of the CC 20 and programmable circuity such as by using an DC 22, such as for example, an FPGA in some embodiments to perform calculations using multiplication and iteration over sparse matrices

Examples of how the states may be mapped including the following in which a set of K constraints are input with the electronic structure problem which the minimal energy state sought by the VQE algorithm ought to satisfy. The set of states that satisfy all K constraints are the valid states, for example, the states shown with the label 3 in Figure 5 of the accompanying drawings. Each of these constraints are related to a physical feature, described by an operator $\widehat{C_k}$ on the fermionic Fock space $\mathcal{F}$ with dimension $N$, where $k \in \{1, \ldots, K\}$.

In principle, it should be possible to assign an operator to any physical quantity and explicit formulas can be found in the literature for electron number, electron number in a specific spin sector, spin multiplicity, spin projection onto an axis, for example, see reference 23. Also, spatial symmetries can be assigned operators for example by expressing them as a suitable combination of permutations [for example, see Reference 24]. The constraints may be of multiple types:

Constraint Type 1. Valid states such as those labelled 3 in Figure 5 which are eigenstates of the operator $\widehat{C_k}$ and have a particular eigenvalue $\lambda_k$. This is equivalent to the statement that a valid state $|\psi\rangle$ resides in the right null space $\mathcal{N}_k \subseteq \mathcal{F}$ of the operator $\widehat{S_k} \equiv \widehat{C_k} - \lambda_k \hat{I}$, where $\hat{I}$ is the identity operator on $\mathcal{F}$.. This can be expressed as

$$\text{If } \hat{C}_k |\psi\rangle = \lambda_k |\psi\rangle$$
$$\text{then } \hat{S}_k |\psi\rangle = \hat{C}_k |\psi\rangle - \lambda_k \hat{I} |\psi\rangle = 0$$
$$\text{so } |\psi\rangle \in \mathcal{N}_k \text{ by definition of } \mathcal{N}_k$$

Equation 7

Constraint Type 2. Valid states such as those labelled 3 in Figure 5 which are eigenstates of the operator $\widehat{C_k}$ and

have an eigenvalue that is contained within a list of $L \leq N$ allowed eigenvalues $\left\{\lambda_k^\ell\right\}$ where $\ell \in (1, \ldots, L)$. This means that valid states reside in the space

$$\mathcal{N}_k = \bigcup_{\ell}^{L} \mathcal{N}_k^\ell \qquad \text{Equation 8}$$

where $\mathcal{N}_k$ are the null spaces of the operators $\widehat{S_k} \equiv \widehat{C_k} - \lambda_k \hat{I}$, employing the same reasoning as in the previous case.

Valid states must reside in the intersection $\mathcal{N}$ of all of the individual spaces $\mathcal{N}_k$ which can be expressed by:

$$\mathcal{N} = \bigcap_{k}^{K} \mathcal{N}_k$$

$$\text{Equation 9}$$

$\mathcal{N}$ is spanned by $M \leq N$ orthonormal states $|m\rangle$, where $M$ is the dimension of $\mathcal{N}$ and m E $(1, \ldots, M)$. Any state in that subspace $|\psi_\mathcal{N}\rangle \in \mathcal{N}$ can be expressed as a linear combination of those orthonormal states as

$$|\psi_\mathcal{N}\rangle = \sum_{m} \alpha_m |m\rangle$$

$$\text{Equation 10}$$

where $\alpha_m$ are complex-valued coefficients. We will now define a linear operator $\hat{D}$, that maps states from $\mathcal{F}$ onto a new, $M$-dimensional Hilbert space $\mathcal{H}$ .. The operator is defined as

$$\hat{D} \equiv \sum_{m} |m_*\rangle \langle m|$$

$$\text{Equation 11}$$

where $\{|m_*\rangle\}$ form a complete orthonormal basis of $\mathcal{H}$, that is

$$\sum_{m} |m_*\rangle \langle m_*| = \hat{I}_\mathcal{H}$$

$$\text{Equation 12}$$

where $\widehat{I_\mathcal{H}}$ is the identity operator on $\mathcal{H}$ .. In some embodiments, equation 11 may be used to define new states as follows:

$$|\psi_{\mathcal{H}}\rangle \equiv \hat{D}\,|\psi_{\mathcal{N}}\rangle = \sum_{m,m'} |m'_*\rangle\,\langle m'|\alpha_m|m\rangle = \sum_{m,m'} \delta_{mm'}\alpha_m\,|m'_*\rangle = \sum_m \alpha_m\,|m_*\rangle$$

<div align="right">Equation 13</div>

which are represented on the QC with at least $[\log_2 M]$ qubits with each $|m_*\rangle$ corresponding to a unique computational basis state. It is an entirely free choice to select which computational basis states correspond to which states $|m_*\rangle$. The simplest scheme is to enumerate the states in binary (starting counting from zero) and use those binary strings as the values of the qubit register. For example, the state $|6_*\rangle$ could be represented by 4 qubits, where the first and third (counting from the right) qubits are in the state $|1\rangle$ and the second and fourth qubits are in the state $|0\rangle$. It may be beneficial to choose a different enumerating scheme, if that results in a simpler circuit for preparing a particular state, but the nuances of this choice are outside of the scope of this document. In any case, such a mapping is bijective between $\mathcal{N}$ and $\mathcal{H}$ because $|\psi_{\mathcal{N}}\rangle$ can be retrieved from $|\psi_{\mathcal{H}}\rangle$ by applying $\widehat{D^\dagger}$ :

$$\hat{D}^\dagger\,|\psi_{\mathcal{H}}\rangle = \sum_{m,m'} |m'\rangle\,\langle m'_*|\alpha_m|m_*\rangle = \sum_{m,m'} \delta_{mm'}\alpha_m\,|m'\rangle = \sum_m \alpha_m\,|m\rangle = |\psi_{\mathcal{N}}\rangle$$

<div align="right">Equation 14</div>

Note that $\hat{D}$ can be applied to any state in $\mathcal{F}$ , but when $\widehat{D^\dagger}$ is subsequently applied, the original state is projected onto $\mathcal{N}$ , which for states already in $\mathcal{N}$ is an identity operation. We can also see this by writing out the expression

$$D^\dagger D = \sum_{m,m'} |m\rangle\,\langle m_*|m'_*\rangle\,\langle m'| = \sum_{m,m'} |m\rangle\,\delta_{mm'}\,\langle m'| = \sum_m |m\rangle\,\langle m|$$

<div align="right">Equation 15</div>

and noticing that it coincides with the definition of a projection operator onto the space spanned by $|m\rangle$, which is $\mathcal{N}$ .. In the context of VQE algorithms, performing an unconstrained search in $\mathcal{H}$ and subsequently mapping the result back to $\mathcal{N}$ using equational 14 is equivalent to performing a search in $\mathcal{F}$ , subject to the constraints k..

Let us define a complete orthonormal basis set $|n\rangle$ on $\mathcal{F}$ , such that the first M states are $|m\rangle$ (which span $\mathcal{N}$ ) and the rest are denoted as $|p\rangle$ (which span $\mathcal{F}$ - $\mathcal{N}$ ), where $p \in (M+1, \ldots, N)$ so

$$|n\rangle = \begin{cases} |m\rangle & \text{if} \quad 1 \le n \le M \\ |p\rangle & \text{if} \quad M < n \le N \end{cases}$$

<div align="right">Equation</div>

16An arbitrary state $|\alpha\rangle \in \mathcal{F}$ can be written as

$$|a\rangle = \sum_n |n\rangle \langle n|a\rangle = \sum_m |m\rangle \langle m|a\rangle + \sum_p |p\rangle \langle p|a\rangle$$

Equation 17

The Hamiltonian operator can be expressed as

$$\hat{H} = \sum_{a,a'} h_{aa'} |a\rangle \langle a'|$$

Equation 18

where $h_{aa'}$ are complex-valued coefficients, such that $h_{aa'}$ and $h_{a'a}$ are complex conjugates of each other.

$$h_{aa'} = h^*_{a'a}$$

Equation 19

This property follows from the requirement that the Hamiltonian is a Hermitian operator. The sets of states denoted by a and a' need not form an orthonormal or complete basis of any particular space, they only need to be sufficiently diverse that they are able to express all terms that the Hamiltonian contains. In the special case of real-valued coefficients, we have $h_{aa'} = h_{a'a}$ This property is used later in the measurement section and so part of the measurement method requires making an appropriate choice of the sets of states a and a'. For example, many open source quantum development tools such as OpenFermion, in conjunction with open source quantum chemistry software such as Psi4 allow the Hamiltonian to be expressed as a sum of terms, each of which consist of a product of a real-valued coefficient and various fermionic creation and annihilation operators. These operators are real-valued matrices in the occupation number basis, so if the occupation number basis is chosen to enumerate a and a', then all coefficients of the Hamiltonian are also real-valued.

This allows expression (17) to be inserted into (18) to obtain

$$\hat{H} = \sum_{a,a'} h_{aa'} \left( \sum_m |m\rangle \langle m|a\rangle + \sum_p |p\rangle \langle p|a\rangle \right) \left( \sum_{m'} \langle a'|m'\rangle \langle m'| + \sum_{p'} \langle a'|p'\rangle \langle p'| \right)$$

Equation 20

If the VQE algorithm performs a search among states the states $|\psi_{\mathcal{N}}\rangle \in \mathcal{N}$ , then we can use the properties of those states

$$\langle \psi_{\mathcal{N}}|p\rangle = \langle p|\psi_{\mathcal{N}}\rangle = \langle \psi_{\mathcal{N}}|p'\rangle = \langle p'|\psi_{\mathcal{N}}\rangle = 0$$

Equation 21

to simplify the calculation of the expectation value of the Hamiltonian.

The expectation value of the Hamiltonian can accordingly be determined using the following expression:

$$\langle \psi_{\mathcal{N}} | \hat{H} | \psi_{\mathcal{N}} \rangle = \sum_{a,a'} h_{aa'} \left( \sum_m \langle \psi_{\mathcal{N}} | m \rangle \langle m | a \rangle + \sum_p \langle \psi_{\mathcal{N}} | p \rangle \langle p | a \rangle \right)$$

$$\cdot \left( \sum_{m'} \langle a' | m' \rangle \langle m' | \psi_{\mathcal{N}} \rangle + \sum_{p'} \langle a' | p' \rangle \langle p' | \psi_{\mathcal{N}} \rangle \right)$$

$$= \sum_{a,a'} h_{aa'} \sum_m \langle \psi_{\mathcal{N}} | m \rangle \langle m | a \rangle \sum_{m'} \langle a' | m' \rangle \langle m' | \psi_{\mathcal{N}} \rangle$$

$$= \langle \psi_{\mathcal{N}} | \left( \sum_m | m \rangle \langle m | \right) \left( \sum_{a,a'} h_{aa'} | a \rangle \langle a' | \right) \left( \sum_{m'} | m' \rangle \langle m' | \right) | \psi_{\mathcal{N}} \rangle$$

$$= \langle \psi_{\mathcal{N}} | \hat{D}^\dagger \hat{D} \hat{H} \hat{D}^\dagger \hat{D} | \psi_{\mathcal{N}} \rangle = \langle \psi_{\mathcal{H}} | \hat{H}_{\mathcal{H}} | \psi_{\mathcal{H}} \rangle \qquad \text{Equation 22}$$

where the transformed Hamiltonian $\widehat{H_{\mathcal{H}}}$ has been defined as

$$\hat{H}_{\mathcal{H}} \equiv \hat{D} \hat{H} \hat{D}^\dagger \qquad \text{Equation 23}$$

which we can explicitly calculate by inserting equations 11 and 18 into equation 23:

$$\hat{H}_{\mathcal{H}} = \left( \sum_m | m_* \rangle \langle m | \right) \left( \sum_{a,a'} h_{aa'} | a \rangle \langle a' | \right) \left( \sum_{m'} | m' \rangle \langle m'_* | \right) = \sum_{m,m'} h_{mm'} | m_* \rangle \langle m'_* | \qquad \text{Equation 24}$$

where

$$h_{mm'} \equiv \sum_{aa'} h_{aa'} \langle m | a \rangle \langle a' | m' \rangle \qquad \text{Equation 25}$$

We are now, in principle, able to evaluate the expectation value of the Hamiltonian $\hat{H}$ in a valid state $| \psi_{\mathcal{N}} \rangle$ on the QC by performing a method of evaluating the expectation value of the transformed Hamiltonian $\widehat{H_{\mathcal{H}}}$ in the mapped state $| \psi_{\mathcal{H}} \rangle$:

$$\langle \psi_{\mathcal{N}} | \hat{H} | \psi_{\mathcal{N}} \rangle = \langle \psi_{\mathcal{H}} | \hat{H}_{\mathcal{H}} | \psi_{\mathcal{H}} \rangle = \sum_{mm'} h_{mm'} \langle \psi_{\mathcal{H}} | m_* \rangle \langle m'_* | \psi_{\mathcal{H}} \rangle \qquad \text{Equation 26}$$

The method of evaluating the expectation value of the transformed Hamiltonian requires fewer (or the same amount of) qubits than the original problem because the dimension of $\mathcal{H}$ is lower than (or equal to) the dimension of $\mathcal{F}$ ..

In order to evaluate the expectation value

$$\langle \psi_{\mathcal{H}} | \hat{H}_{\mathcal{H}} | \psi_{\mathcal{H}} \rangle = \sum_{m,m'} h_{mm'} \langle \psi_{\mathcal{H}} | m_* \rangle \langle m'_* | \psi_{\mathcal{H}} \rangle$$

Equation 27

where $|m_*\rangle$ and $|m'_*\rangle$ are computational basis sets of the quantum computer. To do this, we will divide the terms into two groups: those terms in which m = m' and those where $m \neq m'$:

$$\langle \psi_{\mathcal{H}} | \hat{H}_{\mathcal{H}} | \psi_{\mathcal{H}} \rangle = \sum_{m} h_{mm} \langle \psi_{\mathcal{H}} | m_* \rangle \langle m_* | \psi_{\mathcal{H}} \rangle + \sum_{m \neq m'} E_{mm'}$$

Equation 28

, where

$$E_{mm'} \equiv h_{mm'} \langle \psi_{\mathcal{H}} | m_* \rangle \langle m'_* | \psi_{\mathcal{H}} \rangle$$

Equation 29

Obtaining the terms in the sum where \$m=m'\$ is straightforward and can be calculated simultaneously, based on the same set of measurements. We can do this by following these steps:

1. Prepare the state $|\psi_{\mathcal{H}}\rangle$ on the QC, for example by applying a sequence of gates to the initial state $|\Psi_0\rangle$ of the QC.

2. Perform a measurement on all qubits, which collapses the state $|\psi_{\mathcal{H}}\rangle$ to one of the computational basis states.
3. Repeat the above steps multiple times and record the results each time. From these results, extract the occurrence likelihood $p_m$ of each computational basis state corresponding to the states $|m_*\rangle$ that appear in the first half of equation 28. This can be done via frequentist inference by dividing the number of occurrences $n_m$ with the total number of measurements $n$ :

$$p_m = \lim_{n \to \infty} \frac{n_m}{n}$$

Equation 30

In practical terms, increasing $n$ imporves the accuracy of equation 30.
4. Calculate the values of the terms in the Hamiltonian using Born's rule:

$$\langle \psi_{\mathcal{H}} | m_* \rangle \langle m_* | \psi_{\mathcal{H}} \rangle = p_m$$

Equation 31

In some embodiments, a method of calculating the terms in the Hamiltonian is performed which comprises calculating the terms where $m \neq m'$ comprising first performing a different set of measurements using a new unitary operator $\hat{R}$ defined as follows:

$$\hat{R}^\dagger \hat{R} = \hat{I}_{\mathcal{H}}$$

Equation 32

Equation 32 is then inserted into equation 29 to obtain

$$E_{mm'} + E_{m'm} = h_{mm'} \langle \psi_{\mathscr{H}}|m_*\rangle \langle m'_*|\psi_{\mathscr{H}}\rangle + h_{m'm} \langle \psi_{\mathscr{H}}|m'_*\rangle \langle m_*|\psi_{\mathscr{H}}\rangle$$

$$= h_{mm'} \langle \psi_{\mathscr{H}}|\hat{R}^\dagger \hat{R}|m_*\rangle \langle m'_*|\hat{R}^\dagger \hat{R}|\psi_{\mathscr{H}}\rangle + h_{m'm} \langle \psi_{\mathscr{H}}|\hat{R}^\dagger \hat{R}|m'_*\rangle \langle m_*|\hat{R}^\dagger \hat{R}|\psi_{\mathscr{H}}\rangle$$

$$= h_{mm'} \langle \psi_R|\hat{R}|m_*\rangle \langle m'_*|\hat{R}^\dagger|\psi_R\rangle + h_{m'm} \langle \psi_R|\hat{R}|m'_*\rangle \langle m_*|\hat{R}^\dagger|\psi_R\rangle$$

<div align="right">Equation 33</div>

, where

$$|\psi_R\rangle \equiv \hat{R}|\psi_{\mathscr{H}}\rangle$$

<div align="right">Equation 34</div>

Suppose $\hat{R}$ has the following properties:

$$\hat{R}|m_*\rangle = \frac{1}{\sqrt{2}}\left(|m_*\rangle + |m'_*\rangle\right)$$

<div align="right">Equation 35</div>

$$\hat{R}|m'_*\rangle = \frac{1}{\sqrt{2}}\left(|m_*\rangle - |m'_*\rangle\right)$$

<div align="right">Equation 36</div>

The factor $\frac{1}{\sqrt{2}}$ is necessary for $\hat{R}$ to be unitary. It is important to notice that these properties differentiate between the primed and unprimed states, which have up until now been treated on an equal footing. This introduces an ambiguity that needs to be resolved later: for every pair of states, there needs to exist a rule that determines which of those states will be denoted as primed. Inserting equations 35 and 36 into 33 yields

$$E_{mm'} + E_{m'm} = \frac{h_{mm'}}{2}\left(\langle\psi_R|m_*\rangle + \langle\psi_R|m'_*\rangle\right)\left(\langle m_*|\psi_R\rangle - \langle m'_*|\psi_R\rangle\right)$$

$$+ \frac{h_{m'm}}{2}\left(\langle\psi_R|m_*\rangle - \langle\psi_R|m'_*\rangle\right)\left(\langle m_*|\psi_R\rangle + \langle m'_*|\psi_R\rangle\right)$$

$$= \frac{h_{mm'} + h_{m'm}}{2}\left(\langle\psi_R|m_*\rangle\langle m_*|\psi_R\rangle - \langle\psi_R|m'_*\rangle\langle m'_*|\psi_R\rangle\right)$$

$$\frac{h_{mm'} - h_{m'm}}{2}\left(\langle\psi_R|m'_*\rangle\langle m_*|\psi_R\rangle - \langle\psi_R|m_*\rangle\langle m'_*|\psi_R\rangle\right)$$

<div align="right">Equation 37</div>

The Hamiltonian will now be assumed to have only real-valued coefficients, in other words

$$h_{mm'} = h_{m'm}$$ <div align="right">Equation 38</div>

in the above equations will be assumed. This can always be achieved through equations 18 and 25, by choosing a suitable basis for the Hamiltonian. Using equation 38 in equation 37 reduces equation 37 to

$$E_{mm'} + E_{m'm} = h_{mm'}(\langle\psi_R|m_*\rangle\langle m_*|\psi_R\rangle - \langle\psi_R|m'_*\rangle\langle m'_*|\psi_R\rangle)$$

Equation 39

Both terms can be calculated through measurements on the QC 18, following the same recipe described for the m = m' example case earlier. To actually perform this on a QC such as QC 18, the state $|\psi_R\rangle$ must be prepared by first preparing the state $|\psi_{\mathcal{H}}\rangle$ and then appending a circuit that applies $\hat{R}$. A valid circuit for applying $\hat{R}$ is any circuit that implements equations (35) and (36). In some embodiments, a quantum circuit is designed that creates a superposition of two states which are fully anti-correlated in the qubits in which $|m_*\rangle$ and $|m'_*\rangle$ differ and fully correlated in the qubits in which they do not.

Such a circuit can be generated using the method of quantum circuit generation 800 illustrated schematically in Figure 8B. For example, in in some embodiments the method comprises:

Determining active qubits in 802, for example, by examining, for all terms appearing in the second half of (28), the representations of the states $|m_*\rangle$ and $|m'_*\rangle$ and determining in which qubits they differ. For example, by examining the term $|0100\rangle\langle1101|$, we would say that they differ in the first and the last qubit. Figure 6 shows another example where the representations use two qubits. The qubits which are different for the representations of states $|m_*\rangle$ and $|m'_*\rangle$ are referred to herein as active qubits.

Partitioning the terms into groups, where all terms within a group have the same set of active qubits in 804. For example, the terms $|0100\rangle\langle1101|$ and $|0000\rangle\langle1001|$ belong to the same group. All terms within a single group can be evaluated simultaneously.

Choosing, for each group, one of the active qubits to be the control qubit in 806. This choice can be made entirely arbitrarily and there is no inherent benefit to any particular choice. Insubsequent steps however, the control qubit will be used to perform controlled two-qubit operations, so there may exist a preferential choice in NISQ devices, if there exist some special qubits with better than average performance or connectivity.

Resolving, for every term, the ambiguity introduced by (35) and (36) earlier. The state with $|1\rangle$ on the control qubit shall be the one denoted with a prime. This rule, in conjunction with the circuit described in the next step, is consistent with equations (35) and (36). In principle, the opposite choice would work just as well, if the right sides of (35) and (36) were switched, or if the circuit were suitably modified.

Constructing the circuit in 810, for example, by placing a Hadamard gate on the control qubit and CNOT gates on either side, such that each other active qubit is targeted by either the control qubit or any other qubit that has already been targeted closer to the Hadamard.

Figure 9 of the accompanying drawings shows schematically three examples of circuits which may be generated using the method 800, for an example embodiment where there are four active qubits.

All of the circuits shown in Figure 9 are effectively equivalent to each other and as such may represented by the ZX diagram shown in Figure 8. A ZX diagram can be used to express any one circuit of a set of circuits which represent the same linear map. In other words, any circuit whose representation as a ZX diagram can be transformed to the ZX diagram of Figure 8 represents the same linear map as the example circuits shown in Figure 9. Accordingly, in some embodiments of the disclosed technology, any circuit may be used which can be represented by the ZX diagram of Figure 8.

A technical benefit of this approach is relevant for NISQ devices where certain circuits may be preferable to others. For example, the third example circuit shown in Figure 9 is shallower than the others, meaning it is less prone to decoherence. Another example is choosing a circuit based on the connectivity of the device. If the physical device has no possibility of directly applying a CNOT gate between the bottom two qubits in this example, then the second circuit shown in Figure 9 may be used, as it does not contain such operations, whereas the other two do. Also, as long as the ZX diagram is realized, the circuit need not necessarily contain Hadamard or CNOT gates, if they can be substituted with different gates perhaps native to a particular hardware. To prove that these circuits are indeed suitable for this method, we must confirm that they implement a suitable $\hat{R}$ operator, meaning that equations (35) and (36) are satisfied. This can be most easily seen from the second circuit, which can be written in terms of operators as

$$\hat{R} = \bigotimes_{i=1}^{n} \hat{C}_i^{\text{ctrl}} \otimes \hat{G}_{\text{ctrl}} \otimes \bigotimes_{i=1}^{n} \hat{C}_i^{\text{ctrl}}$$

Equation 40

where $\hat{G}_{\text{ctrl}}$ is the Hadamard gate applied to the control qubit, $\hat{C}_i^{\text{ctrl}}$ denotes a CNOT gate that targets the i-th active qubit and n is the total number of active qubits (control qubit excluded).

For the purposes of this proof, let us denote the states as $|m_*\rangle \leftrightarrow |0xy\rangle$ and $|m_*'\rangle \leftrightarrow |1\bar{x}y\rangle$, where the first number is the state of the control qubit $a$ represents the states of the other active qubits and b represents the states of the remaining qubits. Inserting (40) into equations (35) and (36) shows that they are indeed satisfied:

$$\hat{R}|m_*\rangle = \bigotimes_{i=1}^{n} \hat{C}_i^{\text{ctrl}} \otimes \hat{G}_{\text{ctrl}} \otimes \bigotimes_{i=1}^{n} \hat{C}_i^{\text{ctrl}}|0xy\rangle = \bigotimes_{i=1}^{n} \hat{C}_i^{\text{ctrl}} \otimes \hat{G}_{\text{ctrl}}|0xy\rangle$$

$$= \frac{1}{\sqrt{2}}\bigotimes_{i=1}^{n} \hat{C}_i^{\text{ctrl}}(|0xy\rangle + |1xy\rangle) = \frac{1}{\sqrt{2}}(|0xy\rangle + |1\bar{x}y\rangle) = \frac{1}{\sqrt{2}}(|m_*\rangle + |m_*'\rangle)$$

Equation 41

$$\hat{R}|m_*'\rangle = \bigotimes_{i=1}^{n} \hat{C}_i^{\text{ctrl}} \otimes \hat{G}_{\text{ctrl}} \otimes \bigotimes_{i=1}^{n} \hat{C}_i^{\text{ctrl}}|1\bar{x}y\rangle = \bigotimes_{i=1}^{n} \hat{C}_i^{\text{ctrl}} \otimes \hat{G}_{\text{ctrl}}|1xy\rangle$$

$$= \frac{1}{\sqrt{2}}\bigotimes_{i=1}^{n} \hat{C}_i^{\text{ctrl}}(|0xy\rangle - |1xy\rangle) = \frac{1}{\sqrt{2}}(|0xy\rangle - |1\bar{x}y\rangle) = \frac{1}{\sqrt{2}}(|m_*\rangle - |m_*'\rangle)$$

Equation 42

In the computationally worse case scenario, where all $M^2$ values $h_{mm'}$ are nonzero, the amount of different measurements required is:

$$\sum_{i=0}^{\lceil \log_2 M \rceil} \binom{\lceil \log_2 M \rceil}{i} = 2^{\lceil \log_2 M \rceil}$$

Equation 43

Where the parenthesis refer to combinations. $\lceil$ and $\rfloor$ refer to rounding up to the nearest integer. The result is The result is between $M \le 2^{\lceil \log_2 M \rceil} < 2M$, where the equality is achieved when M is an exact power of two. This result is better than standard Pauli string mapping approaches, where a Pauli string refers to a tensor product of Pauli operators, and where, im the worst case scenario, every possible Pauli string is produced, requiring a total of: $M^2 - 1 \le 4^{\lceil \log_2 M \rceil} - 1 < 2M^2 - 1$ measurements, again with the equality being achieved when M is an exact power of two. Moreover, if the Hamiltonian is mapped (by this or any other method) into the form of equation (24), additional steps need to be performed to cast it into a sum of Pauli strings. One method for casting the Hamiltonian into a sum of Pauli strings is referred to in reference [27], but this scales as $O(M^2 \log M)$. Advantageously, by using the method for calculating the expectation value introduced here, these calculations are avoided.

The following example embodiment finds the ground state of molecular hydrogen.

The first example involves finding the ground state of molecular hydrogen in the STO-3G basis set at an atomic distance of 0.75Å, subject to no constraints. The purpose of this example is to demonstrate how the second part of the method works (calculating the expectation value) and that it can reduce quantum resource requirements independently of the first part of the method, which has no involvement in this example because no constraints are enforced. The second quantized Hamiltonian is obtained through standard methods, by letting software such as Psi4 calculate the necessary orbital overlap integrals:

$$\hat{H} = 0.70557 - 1.24728\ a_1^\dagger a_1 - 0.67284\ a_2^\dagger a_1^\dagger a_2 a_1 - 0.18177\ a_2^\dagger a_1^\dagger a_4 a_3$$
$$- 1.24728\ a_2^\dagger a_2 - 0.48021\ a_3^\dagger a_1^\dagger a_3 a_1 - 0.66198\ a_3^\dagger a_2^\dagger a_3 a_2 + 0.18177\ a_3^\dagger a_2^\dagger a_4 a_1$$
$$- 0.48127\ a_3^\dagger a_3 + 0.18177\ a_4^\dagger a_1^\dagger a_3 a_2 - 0.66198\ a_4^\dagger a_1^\dagger a_4 a_1 - 0.48021\ a_4^\dagger a_2^\dagger a_4 a_2$$
$$- 0.18177\ a_4^\dagger a_3^\dagger a_2 a_1 - 0.69582\ a_4^\dagger a_3^\dagger a_4 a_3 - 0.48127\ a_4^\dagger a_4$$

Equation 44

where all the numbers correspond to units of Hartree. If this were to be transformed with the Jordan-Wigner transformation, it would become

$$\hat{H}_{\mathrm{JW}} = -0.10973 - 0.04544\ \hat{\sigma}_1^x \hat{\sigma}_2^x \hat{\sigma}_3^y \hat{\sigma}_4^y + 0.04544\ \hat{\sigma}_1^x \hat{\sigma}_2^y \hat{\sigma}_3^y \hat{\sigma}_4^x + 0.04544\ \hat{\sigma}_1^y \hat{\sigma}_2^x \hat{\sigma}_3^x \hat{\sigma}_4^y$$
$$- 0.04544\ \hat{\sigma}_1^y \hat{\sigma}_2^y \hat{\sigma}_3^x \hat{\sigma}_4^x + 0.16988\ \hat{\sigma}_1^z + 0.16821\ \hat{\sigma}_1^z \hat{\sigma}_2^z + 0.12005\ \hat{\sigma}_1^z \hat{\sigma}_3^z$$
$$+ 0.16549\ \hat{\sigma}_1^z \hat{\sigma}_4^z + 0.16988\ \hat{\sigma}_2^z + 0.16549\ \hat{\sigma}_2^z \hat{\sigma}_3^z + 0.12005\ \hat{\sigma}_2^z \hat{\sigma}_4^z$$
$$- 0.21886\ \hat{\sigma}_3^z + 0.17395\ \hat{\sigma}_3^z \hat{\sigma}_4^z - 0.21886\ \hat{\sigma}_4^z$$

Equation 45

Equation 45 which has a total of 14 unique Pauli strings, each of which require repeated execution of a unique circuit to evaluate the expectation value, unless subsequently processed with a grouping algorithm to identify groups of commuting observables, in which case the number of unique circuits is reducible to two. The same basis states can also be used to express the Hamiltonian in the form of (18) to obtain, for example, using the get_sparse_operator function in OpenFermion:

$$\hat{H} = 0.90148\ |0000\rangle\langle0000| - 0.45524\ |0001\rangle\langle0001| - 0.45524\ |0010\rangle\langle0010|$$
$$- 1.11615\ |0011\rangle\langle0011| + 0.18177\ |1100\rangle\langle0011| + 0.33374\ |0100\rangle\langle0100|$$
$$- 0.54278\ |0101\rangle\langle0101| - 0.36101\ |0110\rangle\langle0110| - 0.18177\ |1001\rangle\langle0110|$$
$$- 0.54171\ |0111\rangle\langle0111| + 0.33374\ |1000\rangle\langle1000| - 0.18177\ |0110\rangle\langle1001|$$
$$- 0.36101\ |1001\rangle\langle1001| - 0.54278\ |1010\rangle\langle1010| - 0.54171\ |1011\rangle\langle1011|$$
$$+ 0.18177\ |0011\rangle\langle1100| + 0.43884\ |1100\rangle\langle1100| + 0.22430\ |1101\rangle\langle1101|$$
$$+ 0.22430\ |1110\rangle\langle1110| + 0.70557\ |1111\rangle\langle1111|$$

Equation 46

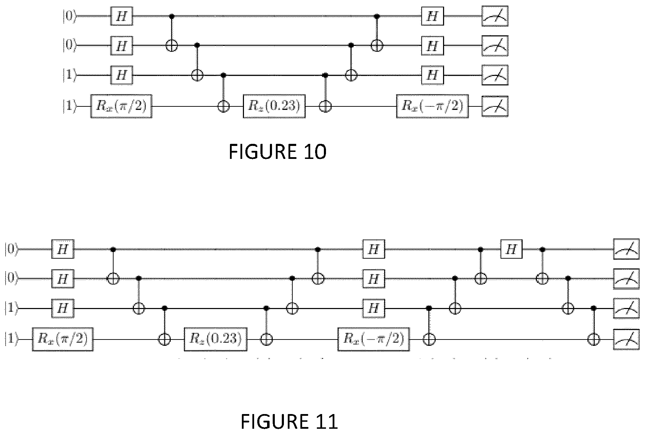

Although this contains more terms than (45), it can be evaluated by performing measurements on just two unique circuits, matching the smallest number of required circuits known in the art for this example. Figure 10 shows a circuit that prepares the ground state $|\Psi_g\rangle$ of molecular hydrogen which is well known in the art and which can be used to obtain $\langle\Psi_g|0011\rangle\langle0011|\Psi_g\rangle = 0.98683$ and $\langle\Psi_g|0011\rangle\langle0011|\Psi_g\rangle = 0.01316$ with all other probabilities being zero. Combining these results with (46) leaves:

$$\langle \psi_g | \hat{H} | \psi_g \rangle = -1.11615 \cdot 0.98683 + 0.43884 \cdot 0.01316$$
$$+ 0.18177(\langle \psi_g | 1100 \rangle \langle 0011 | \psi_t \rangle + \langle \psi_g | 0011 \rangle \langle 1100 | \psi_g \rangle)$$
$$- 0.18177(\langle \psi_g | 1001 \rangle \langle 0110 | \psi_g \rangle + \langle \psi_g | 0110 \rangle \langle 1001 | \psi_g \rangle)$$
$$= -1.09568$$
$$+ 0.18177(\langle \psi_g | 1100 \rangle \langle 0011 | \psi_g \rangle + \langle \psi_g | 0011 \rangle \langle 1100 | \psi_g \rangle)$$
$$- 0.18177(\langle \psi_g | 1001 \rangle \langle 0110 | \psi_g \rangle + \langle \psi_g | 0110 \rangle \langle 1001 | \psi_g \rangle)$$

Equation 47

Figure 11 shows an example of a circuit that can be used to calculate the rest of the terms. In some embodiments, measuring this circuit results in s $\langle \Psi_R | 0011 \rangle \langle 0011 | \Psi_R \rangle = 0.38601$ and $\langle \Psi_R | 1100 \rangle \langle \Psi_R | 0011 \rangle = 0.61399$ with all other probabilities being zero.

$$\langle \psi_g | 1001 \rangle \langle 0110 | \psi_g \rangle + \langle \psi_g | 0110 \rangle \langle 1001 | \psi_g \rangle = \langle \psi_R | 0110 \rangle \langle 0110 | \psi_R \rangle - \langle \psi_R | 1001 \rangle \langle 1001 | \psi_R \rangle$$
$$= 0$$

Equation 48

$$\langle \psi_g | 1100 \rangle \langle 0011 | \psi_g \rangle + \langle \psi_g | 0011 \rangle \langle 1100 | \psi_g \rangle = \langle \psi_R | 0011 \rangle \langle 0011 | \psi_R \rangle - \langle \psi_R | 1100 \rangle \langle 1100 | \psi_R \rangle$$
$$= 0.38601 - 0.61399 = -0.22798$$

Equation 49

thus

$$\langle \psi | \hat{H} | \psi \rangle = -1.09568 - 0.18177 \cdot 0.22798 = -1.13712$$

Equation 50

This is the ground state energy of the Hamiltonian which is expected given the ground state $\langle \Psi_g \rangle$.

A second example embodiment of a chemical computational model will now be described which demonstrates the power of the first part of the method. The example quantum system is also molecular hydrogen with an atomic separation of 0.75Å. A different, accurate basis is used in this second example embodiment, the cc-pvdz basis in which there are a total of 20 spin orbitals.

After the Jordan-Wigner transformation, the Hamiltonian has 2239 terms, each of which need to be measured on a separate 20 qubit circuit. The dimension of the Fock space is $2^{20} = 1048576$. To make solving this problem easier, we can use the knowledge that the ground state of molecular hydrogen is a singlet state with two electrons. We can express this by saying that there must be precisely one electron with spin up and one electron with spin down:

$$\hat{S}_1 = \sum_i^{\uparrow} \hat{a}_i^{\dagger} \hat{a}_i - \hat{I}$$

Equation 51

$$\hat{S}_2 = \sum_i^{\downarrow} \hat{a}_i^{\dagger} \hat{a}_i - \hat{I}$$

Equation 52

We can use the following method to find all states which span their null spaces. First, we represent $\hat{S}$ as a sparse matrix and calculate $\hat{S}^{\dagger}\hat{S}$, where if

$$\langle x|\hat{S}^{\dagger}\hat{S}|y\rangle = 0$$

Equation 53

then either x or y belongs to the right null space of $\hat{S}$.

If a certain row or column in $\hat{S}^{\dagger}\hat{S}$ has no non-zero entries, then that means that the state represented by that row or column is in the null space. By iterating once over the elements of calculate $\hat{S}^{\dagger}\hat{S}$ and checking which rows or columns never appear, all occupation number states which are in the null space can be identified in some embodiments. Since calculate $\hat{S}^{\dagger}\hat{S}$, is diagonal in the occupation number basis, no additional states are needed to span the null space of calculate $\hat{S}$.

In an example embodiment, performing this method results in the null spaces of both calculate $\widehat{S_1}$ $\widehat{S_2}$ being spanned by 10240 states. By comparing the 10240 states to see which ones are common, the intersection of these null spaces is spanned by just 100 states. This result makes sense, as it could also have been obtained from noticing that there are in total 100 possible combinations to distribute one electron over 10 orbitals and another electron over the other 10.

The states that have been found can now be used to construct $\hat{D}$, which can subsequently be used to transform the Hamiltonian. The resulting Hamiltonian has 1576 non-zero elements, which at most require 100 unique measurements to evaluate (most likely much less). The ground state energy of this Hamiltonian is -1.16359, which is exactly the expected result.

In some embodiments, the evaluation of this calculation can be performed on circuits that span just $\lceil \log_2 100 \rceil$ = 7 qubits. This reduction of 13 qubits is a strong result, better than for instance a qubit tapering method, which for diatomic molecules can reduce the required number of qubits by no more than 5.

For example, the table below shows a comparison of the disclosed technology methods (see the bottom row, labelled the disclosed technology) to other known methods. The comparison with the qubit reduction method uses the qubit tapering algorithm disclosed in, for example, see Kanav Setia et al. Precision-preserving qubit reduction based on spatial symmetries in fermionic systems, U.S. Patent Application 16,660,059, filed Oct. 2019. For a comparison with reducing the number of terms, we compare to the Pauli grouping method disclosed in Vladyslav Verteletskyi, Tzu-Ching Yen, and Artur F Izmaylov. Measurement optimization in the variational quantum eigensolver using a minimum clique cover. The Journal of chemical physics, 152(12):124114, 2020. These two methods (the qubit tapering and Pauli grouping) can also be combined with each other, so we also compare to that case in the row labelled "Tapering and Grouping".

The table showcases the resource requirements for simulating three different molecules, LiH, BeH2, and H20 which are all commonly used for benchmarking purposes in the art. For fair comparison, the symmetry constraints used for generating the results are the same for all methods.

**Table showing the resource requirements for simulating three different molecules using the disclosed technology.**

| Type of Method | Number of qubits | | | Number of circuits | | |
|---|---|---|---|---|---|---|
| | LiH | BeH2 | H2O | LiH | BeH2 | H2O |
| No pre-processing | 12 | 14 | 14 | 630 | 665 | 1085 |
| Quibit Tapering | 8 | 9 | 10 | 557 | 595 | 1034 |
| Pauli Grouping | 12 | 14 | 14 | 154 | 208 | 322 |
| Tapering and Grouping | 8 | 9 | 10 | 104 | 107 | 199 |

(continued)

| Type of Method | Number of qubits | | | Number of circuits | | |
|---|---|---|---|---|---|---|
| | LiH | BeH2 | H2O | LiH | BeH2 | H2O |
| The disclosed technology | 7 | 8 | 8 | 114 | 256 | 236 |

In the above table, the disclosed technology uses an embodiment of the disclosed method of representing a plurality of states for performing a quantum computation on a quantum computer and an embodiment of the disclosed hybrid computer system comprising a classical computer system configured to calculate the expectation value of a Hermitian quantum mechanical observable by generating a representation of the quantum mechanical observable as a weighted sum of terms to determine the electronic structure of the three different molecules LiH, BeH2, and H20.

In all three example electronic structure problems, the disclosed computational model which uses the method(s) disclosed herein required the fewest number of qubits.

The disclosed methods according provide a technical advantage as a lower qubit requirement is advantageous for multiple reasons:

1. In NISQ devices, the number of available qubits is limited, which means that there may be cases in which the additional qubit reduction that this method provides enables a calculation that could otherwise not be done due to lack of hardware.

2. Fewer quantum gates are needed to entangle a lower amount of qubits. Using fewer qubits therefore may indirectly reduce the number of needed quantum gates. This is especially true for NISQ devices in which not all qubits are interconnected, which require additional swap operations for each pair of unconnected qubits used in a given calculation. Since each additional quantum gate in a quantum circuit accumulates some error, then a quantum computation performed with fewer gates is likely to produce a smaller cumulative error.

3. Each additional qubit involved in a quantum computation produces preparation, manipulation and readout errors, commonplace in NISQ devices. These errors are reduced due to the exclusion of one or more additional qubits.

In all three examples, this method is similar in performance with respect to the number of circuits needed for execution, when compared to methods that make use of Pauli grouping. However, each of these circuits have a smaller width due to being executed on fewer qubits, which may imply a smaller number of circuit elements overall. Therefore, depending on the specific calculation, it is possible that these circuits are faster to execute than the ones required by the other methods.

The disclosed methods described above may be at least partly implemented through one or more processors, such as, quantum and classical the processors or processing circuitry together with computer program code for performing the functions and actions of the embodiments herein. The computer program code mentioned above may also be provided as a computer program product which may comprise a data carrier carrying computer program code or code means for performing the embodiments herein when being loaded into circuitry of a CC 20 according to the disclosed embodiments. The data carrier, or computer readable medium, may be one of an electronic signal, optical signal, radio signal or computer-readable storage medium.

Those skilled in the art will also appreciate that the processing circuitry 20 and the memory or computer readable storage unit 34, for example shown in Figure 4 which may comprise part of CC 20 or be provided by an external device described above may refer to a combination of analog and digital circuits, and/or one or more processors configured with software and/or firmware, e.g. stored in a memory, that when executed by the one or more processors such as the processing circuitry of CC 20 result in the CC 20 performing one or more steps in a method 100, 200, 300 according to the disclosed embodiments. One or more of the processors of CC 20, as well as any other digital hardware, may be included in a single application-specific integrated circuit (ASIC), or several processors and various digital hardware may be distributed among several separate components, whether individually packaged or assembled into a system-on-$\alpha$-chip (SoC).

In some embodiments of the hybrid computer system 1, the CC 20 and/or the QC may be implemented as distributed systems which may communicate with other components of the hybrid computer system 1 using suitable communication channels. Such communication channels may be point-to-point, or use a network, for example, over cellular or satellite networks which support wireless communications. The wireless communications may conform to one or more public or proprietary communications standards, protocols and/or technologies, including but not limited to Global System for Mobile Communications (GSM), Enhanced Data GSM Environment (EDGE), highspeed downlink packet access (HSDPA), wideband code division multiple access (W-CDMA), code division multiple access (CDMA), time division multiple access (TDMA), Bluetooth, Wireless Fidelity (Wi-Fi) (e.g., IEEE 802.11a, IEEE 802.11b, IEEE 802.11g and/or IEEE 802.11n), voice over Internet Protocol (VoIP), Wi-MAX, a protocol for email (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), and/or Instant Messaging and Presence Service (IMPS)), and/or Short Message Service (SMS)), or any other suitable communication protocol, including communication protocols not yet developed as of the filing date of this document.

The operating system of the vehicle may further various software components and/or drivers for controlling and managing general system tasks (e.g., memory management, storage device control, power management, etc.) and facilitates communication between various hardware and software components.

Where the disclosed technology is described with reference to drawings in the form of block diagrams and/or flowcharts, it is understood that several entities in the drawings, e.g., blocks of the block diagrams, and also combinations of entities in the drawings, can be implemented by computer program instructions, which instructions can be stored in a computer-readable memory, and also loaded onto a computer or other programmable data processing apparatus. Such computer program instructions can be provided to a processor of a general purpose computer, a special purpose computer and/or other programmable data processing apparatus to produce a machine, such that the instructions, which execute via the processor of the computer and/or other programmable data processing apparatus, create means for implementing the functions/acts specified in the block diagrams and/or flowchart block or blocks.

In some implementations and according to some aspects of the disclosure, the functions or steps noted in the blocks can occur out of the order noted in the operational illustrations. For example, two blocks shown in succession can in fact be executed substantially concurrently or the blocks can sometimes be executed in the reverse order, depending upon the functionality/acts involved. Also, the functions or steps noted in the blocks can according to some aspects of the disclosure be executed continuously in a loop.

The description of the example embodiments provided herein have been presented for the purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatus, modules, systems, and computer program products. It should be appreciated that the example embodiments presented herein may be practiced in any combination with each other.

It should be noted that the word "comprising" does not necessarily exclude the presence of other elements, features, functions, or steps than those listed and the words "a" or "an" preceding an element do not exclude the presence of a plurality of such elements, features, functions, or steps. It should further be noted that any reference signs do not limit the scope of the claims, that the example embodiments may be implemented at least in part by means of both hardware and software, and that several "means", "units" or "devices" may be represented by the same item of hardware.

The various example embodiments described herein are described in the general context of methods, and may refer to elements, functions, steps or processes, one or more or all of which may be implemented in one aspect by a computer program product, embodied in a computer-readable medium, including computer-executable instructions, such as program code, executed by computers in networked environments.

A computer-readable medium may include removable and non-removable storage devices including, but not limited to, Read Only Memory (ROM), Random Access Memory, RAM), which may be static RAM, SRAM, or dynamic RAM, DRAM. ROM may be programmable ROM, PROM, or EPROM, erasable programmable ROM, or electrically erasable programmable ROM, EEPROM. Suitable storage components for memory may be integrated as chips into a printed circuit board or other substrate connected with one or more processors or processing modules, or provided as removable components, for example, by flash memory (also known as USB sticks), compact discs (CDs), digital versatile discs (DVD), and any other suitable forms of memory. Unless not suitable for the application at hand, memory may also be distributed over a various forms of memory and storage components, and may be provided remotely on a server or servers, such as may be provided by a cloud-based storage solution. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

The memory used by any apparatus whatever its form of electronic apparatus described herein accordingly comprise any suitable device readable and/or writeable medium, examples of which include, but are not limited to: any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry. Memory may store any suitable instructions, data or information, including a computer program, software, an application including one or more of logic, rules, code, tables, etc. and/or other instructions capable of being executed by processing circuitry and, utilized by the apparatus in whatever form of electronic apparatus. Memory may be used to store any calculations made by processing circuitry and/or any data received via a user or communications or other type of data interface. In some embodiments, processing circuitry and memory are integrated. Memory may be also dispersed amongst one or more system or apparatus components. For example, memory may comprises a plurality of different memory modules, including modules located on other network nodes in some embodiments.

LIST OF EQUATION ORIGINS

In the above, many of the equations are well-known in the art, for example, they can be derived from textbook quantum mechanics. For example, the definition of the right null space (equation 7) is also referred to in the art as the Kernel, is well known in mathematics, for example see: https: //en.wikipedia.org/wiki/Kernel_(linear_algebra) or a standard text book in this field. Equation 8 is derived from the definition of union in set theory where if an element is contained in at least one set within a list of sets, it must also be contained in the union of those sets.

Equation (9) derives from the definition of intersection in set theory - if an element is every set within a list of sets, it must also be contained in the intersection of those sets.

Equation (10) is equivalent to equation (1.2.8) in [28]

Equation (11) is an original definition

Equation (12) is equivalent to equation (1.3.11) in [28]

Equation (13) derives from (10) and (11) and uses (1.3.6) in [28]

Equation (14) derives from (11) and (13) and uses (1.2.35) and (1.3.6) in [28]

Equation (15) derives from (11) and uses (1.3.6) in [28]

Equation (16) is an original definition

Equation (17) is equivalent to (1.3.9) in [28]

Equation (18) is equivalent to (1.3.17) in [28]

Equation (19) derives from (18) and (1.3.21) in [28]

Equation (20) derives from (17) and (18)

Equation (21) is equivalent to (1.2.14) and (1.2.15) in [28] because $|p\rangle$ are orthogonal to all states in N by definition

Equation (22) derives from (20) and uses (21),(15) and the first part of (13)

Equation (23) is an original definition

Equation (24) derives from (23),(11) and the hermitian conjugate of (11), obtained using (1.2.35) in [28]

Equation (25) is an original definition

Equation (26) derives from (13) and (24)

Equation (27) repeats (26)

Equation (28) is a rewriting of (27)

Equation (29) is an original definition

Equation (30) is the definition of frequentist probability

Equation (31) is considered a postulate of quantum mechanics and can be found in (1.4.4) in [28]

(32) is equivalent to (1.5.2) in [28]

Equation (33) derives from (29) and (32)

Equation (34), (35) and (36) are original definitions

Equation (37) derives from (33), (35) and (36)

Equation (38) is asserted here as an assumption. Anything after this point in the description can only be directly used on input that complies with this assumption. Compliance can be achieved for any problem Hamiltonian, by choosing a suitable basis in (18). Equation (39) derives from (37) and (38. )

Equation (40) is a mathematical expression for the second circuit, with definitions of the operators provided in the text.

Equation (41) and (42) derive from (40) and the definitions of the notations of the states provided in the text. It also uses definitions and properties of Hadamard and CNOT gates, which are provided throughout chapter 4 of [29]

Equation (43) uses a wellknown formula for combinations https://en.wikipedia.org/wiki/Combination#Number_of_k-combinations_for_all_k.

## LIST OF REFERENCES

[1] Alberto Peruzzo, et al., "A variational eigenvalue solver on a photonic quantum processor," Nature communications, vol. 5, no. 1, pp. 1-7, 2014.

[2] Marco Cerezo, et al., "Variational quantum algorithms," Nature Reviews Physics, pp. 1-20, 2021.

[3] Dmitry A Fedorov, Bo Peng, Niranjan Govind, and Yuri Alexeev, "Vqe method: A short survey and recent developments," arXiv preprint arXiv:2103.08505, 2021.

[4] Yudong Cao, et al., "Quantum chemistry in the age of quantum computing," Chemical reviews, vol. 119, no. 19, pp. 10856-10915, 2019.

[5] Sam McArdle, Suguru Endo, Alan Aspuru-Guzik, Simon C Benjamin, and Xiao Yuan, "Quantum computational chemistry," Reviews of Modern Physics, vol. 92, no. 1, p. 015003, 2020. 17

[6] Mezzacapo et al., "Hardware-efficient variational quantum eigenvalue solver for quantum computing machines," U.S. Patent 10,839,306, Nov. 2020.

[7] Jonathan Romero, et al., "Strategies for quantum computing molecular energies using the unitary coupled cluster ansatz," Quantum Science and Technology, vol. 4, no. 1, p. 014008, 2018.

[8] Harper R Grimsley, Sophia E Economou, Edwin Barnes, and Nicholas J Mayhall, "An adaptive variational algorithm for exact molecular simulations on a quantum computer," Nature communications, vol. 10, no. 1, pp. 1-9, 2019.

[9] Gian-Luca R Anselmetti, David Wierichs, Christian Gogolin, and Robert M Parrish, "Local, expressive, quantum-number-preserving vqe ansatze for fermionic systems," arXiv preprint arXiv:2104.05695, 2021.

[10] Bryan T Gard, et al., "Efficient symmetry-preserving state preparation circuits for the variational quantum eigensolver algorithm," npj Quantum Information, vol. 6, no. 1, pp. 1-9, 2020.

[11] Jarrod R McClean, Jonathan Romero, Ryan Babbush, and Alan Aspuru-Guzik, "The theory of variational hybrid quantum-classical algorithms," New Journal of Physics, vol. 18, no. 2, p. 023023, 2016.

[12] Ilya G Ryabinkin, Scott N Genin, and Artur F Izmaylov, "Constrained variational quantum eigensolver: Quantum computer search engine in the fock space," Journal of chemical theory and computation, vol. 15, no. 1, pp. 249-255, 2018.

[13] Kohdai Kuroiwa and Yuya O Nakagawa, "Penalty methods for a variational quantum eigensolver," Physical Review Research, vol. 3, no. 1, p. 013197, 2021.

[14] Michael A Nielsen et al., "The fermionic canonical commutation relations and the jordanwigner transform," School of Physical Sciences The University of Queensland, vol. 59, 2005.

[15] Pascual Jordan and Eugene Paul Wigner, "über das paulische äquivalenzverbot," in The Collected Works of Eugene Paul Wigner, pp. 109-129, Springer, 1993.

[16] Jacob T Seeley, Martin J Richard, and Peter J Love, "The bravyi-kitaev transformation for quantum computation of electronic structure," The Journal of chemical physics, vol. 137, no. 22, p. 224109, 2012.

[17] Kanav Setia and James D Whitfield, "Bravyi-kitaev superfast simulation of electronic structure on a quantum computer," The Journal of chemical physics, vol. 148, no. 16, p. 164104, 2018.

[18] Mark Steudtner and Stephanie Wehner, "Fermion-to-qubit mappings with varying resource requirements for quantum simulation," New Journal of Physics, vol. 20, no. 6, p. 063010, 2018.

[19] Lennart D. Gunlycke, "Compact, symmetry-adapted mapping between fermionic systems and quantum computers," U.S. Patent Application 17,184,516, filed Feb. 2021.

[20] Sean A Fischer and Daniel Gunlycke, "Symmetry configuration mapping for representing quantum systems on quantum computers," arXiv preprint arXiv:1907.01493, 2019.

[21] Mark Steudtner, Methods to simulate fermions on quantum computers with hardware limitations. PhD thesis, Leiden, 2019.

[22] Kanav Setia et al., "Precision-preserving qubit reduction based on spatial symmetries in fermionic systems," U.S. Patent Application 16,660,059, filed Oct. 2019.

[23] Trygve Helgaker, Poul Jorgensen, and Jeppe Olsen, Molecular electronic-structure theory. John Wiley & Sons, 2014.

[24] Kanav Setia, et al., "Reducing qubit requirements for quantum simulations using molecular point group symmetries," Journal of Chemical Theory and Computation, vol. 16, no. 10, pp. 6091-6097, 2020.

[25] John van de Wetering, "Zx-calculus for the working quantum computer scientist," arXiv preprint arXiv:2012.13966, 2020.

[26] Bob Coecke, Dominic Horsman, Aleks Kissinger, and Quanlong Wang, "Kindergarden quantum mechanics graduates (... or how i learned to stop gluing lego together and love the zx-calculus)," arXiv preprint arXiv:2102.10984, 2021.

[27] Daniel Gunlycke, Mark C Palenik, Alex R Emmert, and Sean A Fischer, "Efficient algorithm for generating pauli coordinates for an arbitrary linear operator," arXiv preprint arXiv:2011.08942, 2020.

[28] Jun John Sakurai, Modern quantum mechanics; rev. ed. Reading, MA: Addison-Wesley, 1994.

[29] Michael A Nielsen and Isaac L Chuang, Quantum computation and quantum information. Cambridge University Press, 10th anniv ed., 2010.

**Claims**

1. A computer-implemented method for calculating the expectation value of a Hermitian quantum mechanical observable, the method comprising:

   generating a representation of the quantum mechanical observable as a sum of outer products between two computational basis states of a quantum computer;
   partitioning the representation into disjoint subsets of terms;
   generating one quantum circuit, or any equivalent of it, for each subset, determined by the terms within each particular subset;
   executing the quantum circuits on the quantum computer for a plurality of repetitions to obtain a plurality of measurement results; and
   determining the expectation value of the observable using the plurality of measurement results.

2. The method of claim 1, wherein the partitioning is configured such that the minimal number of subsets required for the expectation value calculation does not exceed the dimension of the computational basis.

3. The method of claim 1 or 2, wherein the expectation value is retrieved as a linear combination of measurement outcome probabilities which are inferred from the measurements via Born's rule.

4. The method of any one of the previous claims, wherein the quantum circuits are configured to evaluate the observable in a specific quantum state.

5. The method of any one of the previous claims, wherein the computer-implemented method simulates a quantum state of a real system, based on the calculated expectation value of the quantum mechanical observable.

6. The method of any one of the previous claims, wherein the representation of the quantum mechanical observable in the computational basis of the quantum computer is a representation of a Hamiltonian of the system.

7. The method of any one of the previous claims, wherein the system is an electronic structure.

8. The method of any one of the previous claims, wherein the expectation value calculation is a component in determining a ground state of the fermionic/electronic structure.

9. The method of any one of the previous claims, wherein the expectation value calculation is a component in determining the lowest energy state of the fermionic/electronic structure, subject to a set of constraints.

10. The method of any one of the previous claims, wherein the quantum circuit used to evaluate each of the disjoint subset of terms which partition the representation comprises, for each said subset:

    a preparation segment configured to prepared the quantum state;
    a circuit alignment segment configured to, for every term in that disjoint subset of terms partitioning the representation, prepare the same state if it were applied to both computational basis states within that term; and
    a measurement segment, which performs measurements."

11. The method of claim 12, wherein the circuit alignment segment belongs to a family of circuits sharing a unique diagrammatic representation of the circuit alignment segment, wherein the unique diagrammatic representation represents a plurality of active qubits for the computational basis states of each term of a disjoint subset of terms which partition the representation differ in their state and at least one active qubit which is a designated control qubit.

12. The method of claim 12, wherein the alignment segment is generated by applying a Hadamard gate to the control qubit and CNOT gates to either side of the Hadamard gate, such that every other active qubit is targeted from both sides by the control qubit either directly or by proxy.

13. A hybrid quantum and classical computer system comprising:

    a quantum computer system; and
    a classical computer system configured to implement a quantum model for solving a quantum system problem by calculating the expectation value of a Hermitian quantum mechanical observable according to any one of claims 1 to 12, wherein the classical computer system includes at least one dedicated classical computing processor or processing circuitry.

14. The hybrid quantum and classical computer system of claim 13, wherein the classical computer system comprises classical computer circuitry and is configured to:

generate a representation of the quantum mechanical observable as a sum of outer products between two computational basis states of a quantum computer;
partition the representation into disjoint subsets of terms;
generate one quantum circuit, or any equivalent of it, for each subset, determined by the terms within each particular subset;
execute the quantum circuits on the quantum computer for a plurality of repetitions to obtain a plurality of measurement results; and
determine the expectation value of the observable using the plurality of measurement results.

15. A hybrid quantum and classical computer system comprising:
a classical computer system configured to calculate the expectation value of a Hermitian quantum mechanical observable by:

generating a representation of the quantum mechanical observable as a weighted sum of terms, where each term is an outer product between two computational basis states of a quantum computer;
partitioning the representation into disjoint subsets of terms;
generating at least one quantum circuit, or any equivalent of that quantum circuit for each subset of terms of the partitioned representation, determined using the terms within each particular subset of terms of the partitioned representation; and
a quantum computer configured to:

execute the quantum circuits for a plurality of repetitions to obtain a plurality of measurement results,
output the obtained plurality of measurement results to the classical computer for processing,
wherein the classical computer is configured to process the received plurality of measurement results to determine the expectation value of the observable.

FIGURE 1

EP 4 290 421 A1

**1**

**10**

CLASSICAL COMPUTER 20

PROCESS INPUT

CONTROL SIGNALS FOR CIRCUTRY

GENERATE QUANTUM CIRCUITS & CONTROL SIGNALS FOR VQE ALG.

DC 22

MAP HAMILTONIAN TERMS & CONSTRAINTS

VQE ALGORITHM 16

QUANTUM COMPUTER 18

STATE PREPARATION

MEASUREMENT

CLASSICAL COMPUTER 20

RESULT PROCESSING

PARAMETER OPTIMIZATION

MODEL/ SYSTEM OUTPUT

FIGURE 2

100

102
Input Description of Molecule

104
Identify a subspace of states conforming to a set of one or more constraints of an electronic structure

106
Performing a linear bijective mapping between a plurality of states of the subspace and an unconstrained Hilbert space

108
*Output Mapped Input? to VQE algorithm?*

110
Process Mapped Input using VQE algorithm

112
Generate a representation of the electronic structure problem Hamiltonian on the unconstrained Hilbert space

114
Generating a representation of the unconstrained Hilbert space on a quantum computer.

116
VQE algorithm outputs ground state energy of molecule

FIGURE 3

DC 22

210 Solve Null Space Problem(s)

212 Construct bijective mapping

214 Transform Hamiltonian

216 Partition Hamiltonian

200

CC 20

202 Specify Input

204 Construct Electronic Fock Space

206 Calculate Hamiltonian

208 Prepare Constraints

218 Prepare representation for QPU

220 Construct quantum circuits

230 Calculate expectation value of terms

232 Calculate expectation value of transformed Hamiltonian

234 Obtain Expectation value of original problem Hamiltonian

QC 18

222 Prepare Initial Quantum State

224 Execute quantum circuit

226 Retrieve Measurement Results

228 Number of Shots Reached?

No

Yes

FIGURE 4

FIGURE 5

Operator representation  Partitioning  Circuit generation

$H = c_1 |00\rangle \langle 00|$

$+ c_2 |01\rangle \langle 00|$

$+ c_3 |10\rangle \langle 00|$

$+ c_4 |11\rangle \langle 00|$

$+ c_5 |00\rangle \langle 01|$

$+ c_6 |01\rangle \langle 01|$

$+ c_7 |10\rangle \langle 01|$

$+ c_8 |11\rangle \langle 01|$

$+ c_9 |00\rangle \langle 10|$

$+ c_{10} |01\rangle \langle 10|$

$+ c_{11} |10\rangle \langle 10|$

$+ c_{12} |11\rangle \langle 10|$

$+ c_{13} |00\rangle \langle 11|$

$+ c_{14} |01\rangle \langle 11|$

$+ c_{15} |10\rangle \langle 11|$

$+ c_{16} |11\rangle \langle 11|$

both digits of bitstrings match

$|00\rangle \langle 00|$
$|01\rangle \langle 01|$
$|10\rangle \langle 10|$
$|11\rangle \langle 11|$

CS#1

first digit of bitstrings match

$|01\rangle \langle 00|$
$|00\rangle \langle 01|$
$|11\rangle \langle 10|$
$|10\rangle \langle 11|$

$H$

CS#2

second digit of bitstrings match

$|10\rangle \langle 00|$
$|11\rangle \langle 01|$
$|00\rangle \langle 10|$
$|01\rangle \langle 11|$

$H$

CS#3

no digits of bitstrings match

$|11\rangle \langle 00|$
$|10\rangle \langle 01|$
$|01\rangle \langle 10|$
$|00\rangle \langle 11|$

$H$

CS#4

FIGURE 6

300

| Generating a representation of the quantum mechanical observable as a sum of outer products between two computational basis states of a quantum computer | 302 |

| Partition the representation into disjoint subsets of terms | 304 |

| Generate a quantum circuit for each subset determined by the terms within each particular subset | 306 |

| Obtain a plurality of measurement results by executing the quantum circuits on the quantum computer for a plurality of repetitions | 308 |

| Determining the expectation value of the observable using the plurality of measurement results | 310 |

FIGURE 7

40

FIGURE 8A

802

Determine active qubits

800

804

Partition the terms into groups, where all terms within a group have the same set of active qubits.

806

Chose control qubit for each group to be used for performing controlled two-qubit operations

808

Resolve equation ambiguities

810

Construct the circuit

FIGURE 8B

FIGURE 9

FIGURE 10

FIGURE 11

Europäisches
Patentamt

European
Patent Office

Office européen
des brevets

# EUROPEAN SEARCH REPORT

Application Number

EP 22 17 7733

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JULES TILLY ET AL: "The Variational Quantum Eigensolver: a review of methods and best practices", ARXIV.ORG, CORNELL UNIVERSITY LIBRARY, 201 OLIN LIBRARY CORNELL UNIVERSITY ITHACA, NY 14853, 9 November 2021 (2021-11-09), XP091095635, * Sections 2, 2.2, 3.3, 5.2, 5.2.2, 5.3 * | 1-15 | INV. G06N10/20 G06N10/60 |
| A | PRANAV GOKHALE ET AL: "Minimizing State Preparations in Variational Quantum Eigensolver by Partitioning into Commuting Families", ARXIV.ORG, CORNELL UNIVERSITY LIBRARY, 201 OLIN LIBRARY CORNELL UNIVERSITY ITHACA, NY 14853, 31 July 2019 (2019-07-31), XP081452908, * figure 7 * | 1-15 | |
| A | IKKO HAMAMURA ET AL: "Efficient evaluation of Pauli strings with entangled measurements", ARXIV.ORG, CORNELL UNIVERSITY LIBRARY, 201 OLIN LIBRARY CORNELL UNIVERSITY ITHACA, NY 14853, 19 September 2019 (2019-09-19), XP081479318, * Section II.F * | 1-15 | TECHNICAL FIELDS SEARCHED (IPC) G06N |

The present search report has been drawn up for all claims

| Place of search | Date of completion of the search | Examiner |
|---|---|---|
| The Hague | 25 November 2022 | Bohn, Patrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                         

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 16660059 A
- US 10839306 B, Mezzacapo
- US 17184516 A, Lennart D. Gunlycke

### Non-patent literature cited in the description

- *The Journal of chemical physics,* 2020, vol. 152 (12), 124114
- **ALBERTO PERUZZO et al.** A variational eigenvalue solver on a photonic quantum processor. *Nature communications,* 2014, vol. 5 (1), 1-7
- **MARCO CEREZO et al.** Variational quantum algorithms. *Nature Reviews Physics,* 2021, 1-20
- **DMITRY A FEDOROV ; BO PENG ; NIRANJAN GOVIND ; YURI ALEXEEV.** Vqe method: A short survey and recent developments. *arXiv:2103.08505,* 2021
- **YUDONG CAO et al.** Quantum chemistry in the age of quantum computing. *Chemical reviews,* 2019, vol. 119 (19), 10856-10915
- **SAM MCARDLE ; SUGURU ENDO ; ALAN ASPURU-GUZIK ; SIMON C BENJAMIN ; XIAO YUAN.** Quantum computational chemistry. *Reviews of Modern Physics,* 2020, vol. 92 (1), 015003
- **JONATHAN ROMERO et al.** Strategies for quantum computing molecular energies using the unitary coupled cluster ansatz. *Quantum Science and Technology,* 2018, vol. 4 (1), 014008
- **HARPER R GRIMSLEY ; SOPHIA E ECONOMOU ; EDWIN BARNES ; NICHOLAS J MAYHALL.** An adaptive variational algorithm for exact molecular simulations on a quantum computer. *Nature communications,* 2019, vol. 10 (1), 1-9
- **GIAN-LUCA R ANSELMETTI ; DAVID WIERICHS ; CHRISTIAN GOGOLIN ; ROBERT M PARRISH.** Local, expressive, quantum-number-preserving vqe ansatze for fermionic systems. *arXiv:2104.05695,* 2021
- **BRYAN T GARD et al.** Efficient symmetry-preserving state preparation circuits for the variational quantum eigensolver algorithm. *npj Quantum Information,* 2020, vol. 6 (1), 1-9
- **JARROD R MCCLEAN ; JONATHAN ROMERO ; RYAN BABBUSH ; ALAN ASPURU-GUZIK.** The theory of variational hybrid quantum-classical algorithms. *New Journal of Physics,* 2016, vol. 18 (2), 023023
- **ILYA G RYABINKIN ; SCOTT N GENIN ; ARTUR F IZMAYLOV.** Constrained variational quantum eigensolver: Quantum computer search engine in the fock space. *Journal of chemical theory and computation,* 2018, vol. 15 (1), 249-255
- **KOHDAI KUROIWA ; YUYA O NAKAGAWA.** Penalty methods for a variational quantum eigensolver. *Physical Review Research,* 2021, vol. 3 (1), 013197
- **MICHAEL A NIELSEN et al.** The fermionic canonical commutation relations and the jordanwigner transform. School of Physical Sciences The University of Queensland, 2005, vol. 59
- über das paulische äquivalenzverbot. **PASCUAL JORDAN ; EUGENE PAUL WIGNER.** The Collected Works of Eugene Paul Wigner. Springer, 1993, 109-129
- **JACOB T SEELEY ; MARTIN J RICHARD ; PETER J LOVE.** The bravyi-kitaev transformation for quantum computation of electronic structure. *The Journal of chemical physics,* 2012, vol. 137 (22), 224109
- **KANAV SETIA ; JAMES D WHITFIELD.** Bravyi-kitaev superfast simulation of electronic structure on a quantum computer. *The Journal of chemical physics,* 2018, vol. 148 (16), 164104
- **MARK STEUDTNER ; STEPHANIE WEHNER.** Fermion-to-qubit mappings with varying resource requirements for quantum simulation. *New Journal of Physics,* 2018, vol. 20 (6), 063010
- **SEAN A FISCHER ; DANIEL GUNLYCKE.** Symmetry configuration mapping for representing quantum systems on quantum computers. *arXiv:1907.01493,* 2019
- Methods to simulate fermions on quantum computers with hardware limitations. **MARK STEUDTNER.** PhD thesis. Leiden, 2019
- **TRYGVE HELGAKER ; POUL JORGENSEN ; JEPPE OLSEN.** Molecular electronic-structure theory. John Wiley & Sons, 2014

- **KANAV SETIA et al.** Reducing qubit requirements for quantum simulations using molecular point group symmetries. *Journal of Chemical Theory and Computation,* 2020, vol. 16 (10), 6091-6097
- **JOHN VAN DE WETERING.** Zx-calculus for the working quantum computer scientist. *arXiv:2012.13966,* 2020
- **BOB COECKE ; DOMINIC HORSMAN ; ALEKS KISSINGER ; QUANLONG WANG.** Kindergarden quantum mechanics graduates (... or how i learned to stop gluing lego together and love the zx-calculus). *arXiv:2102.10984,* 2021
- **DANIEL GUNLYCKE ; MARK C PALENIK ; ALEX R EMMERT ; SEAN A FISCHER.** Efficient algorithm for generating pauli coordinates for an arbitrary linear operator. *arXiv:2011.08942,* 2020
- **JUN JOHN SAKURAI.** Modern quantum mechanics. Addison-Wesley, 1994
- **MICHAEL A NIELSEN ; ISAAC L CHUANG.** Quantum computation and quantum information. Cambridge University Press, 2010